(19) Europäisches Patentamt
European Patent Office
Office européen des brevets

(11) EP 2 439 223 A1

(12) # EUROPÄISCHE PATENTANMELDUNG

(43) Veröffentlichungstag:
**11.04.2012 Patentblatt 2012/15**

(21) Anmeldenummer: **10013493.1**

(22) Anmeldetag: **11.10.2010**

(51) Int Cl.:
***C08G 59/18*** *(2006.01)*
***C09D 17/00*** *(2006.01)*
***C08G 77/42*** *(2006.01)*
***C09D 183/00*** *(2006.01)*
***C09D 7/12*** *(2006.01)*
***C08G 77/388*** *(2006.01)*
***C08G 77/452*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BYK-Chemie GmbH**
**46483 Wesel (DE)**

(72) Erfinder:
- **Hans, Marc**
  **46485 Wesel (DE)**
- **Jaunky, Wojciech**
  **46485 Wesel (DE)**
- **Frank, Albert**
  **46509 Xanten (DE)**
- **Launag, Thomas**
  **46562 Voerde (DE)**
- **Omeis, Jürgen**
  **46286 Dorsten-Lembeck (DE)**

(74) Vertreter: **Leifert & Steffan**
**Patentanwälte**
**Postfach 10 40 09**
**40031 Düsseldorf (DE)**

(54) **Polysiloxan-Gruppen enthaltende Copolymere mit Epoxy/Amin-Grundgerüst und deren Verwendung**

(57) Die vorliegende Erfindung betrifft ein mindestens eine Polysiloxan-Gruppe enthaltendes Copolymer, dessen Grundgerüst ein Addukt mindestens eines Amins und mindestens eines Epoxids ist. Die vorliegende Erfindung betrifft des Weiteren die Verwendung der Produkte als Additive in Beschichtungsmitteln, Kunststoffen oder homogenen Dispersionen, z.B. als Dispergiermittel für organische und anorganische Pigmente und Füllstoffe in Öl-basierten Zusammensetzungen oder als Oberflächenmodifizierungsmittel.

EP 2 439 223 A1

## Beschreibung

Die vorliegende Erfindung betrifft Polysiloxan-Gruppen enthaltende Copolymere, die als Additive in Beschichtungsmittelzusammensetzungen, Pulverzusammensetzungen und polymeren Formmassen eingesetzt werden können. Die vorliegende Erfindung betrifft des Weiteren die Verwendung der Produkte als Additive in Beschichtungsmittelzusammensetzungen, Pulverzusammensetzungen oder polymeren Formmassen, z.B. als Dispergiermittel für organische und anorganische Pigmente und Füllstoffe in Öl-basierten Zusammensetzungen, wie zum Beispiel Zusammensetzungen basierend auf pflanzlichem Öl, tierischem Öl oder Silikonöl, oder als Oberflächenmodifizierungsmittel, wie beispielsweise Fluss- und Verlaufmittel, Gleitmittel, Mittel zur Verbesserung der Kratzbeständigkeit, Hydrophobisierungsmittel und Mittel zur Verbesserung der Reinigungseigenschaften des additivierten Materials.

Es ist bekannt silikonhaltige Verbindungen zu Beschichtungsstoffen und polymeren Formmassen hinzuzufügen (Lackadditive von Johan Bieleman, Weinheim; New York; Chichester; Brisbane; Singapore; Toronto: Wiley-VCH, 1998), um beispielsweise Eigenschaften des Substrats, wie die Benetzung, den Verlauf und die Gleiteigenschaften der Beschichtungsoberflächen zu verbessern oder Eigenschaften zu erhalten, wie eine verbesserte Kratzfestigkeit bei Möbellacken oder Fahrzeuglacken, oder antiadhäsive Eigenschaften, z.B. bei Papierbeschichtungen, zu erhalten oder aber leicht zu reinigende Oberflächen zu erhalten.

Eine weitere Verwendung silikonhaltiger Verbindungen besteht in der Behandlung von Pulvern, um diese hinsichtlich Ihrer Dispersionseigenschaften zu verbessern und es zu ermöglichen, diese stabil in ölhaltigen Zusammensetzungen zu dispergieren.

Im Allgemeinen werden diese Verbindungen durch radikalische Copolymerisationstechniken synthetisiert, z.B. unter Verwendung monomethacrylisch funktionalisierter polysiloxanfunktioneller Silikone und anderer Monomere, wie beispielsweise Methylmethacrylat, Butylmethacrylat, Hydroxymethylmethacrylat, Glycerylmethylmethacrylat, Acrylnitril, Dimethylacrylamid oder Vinylpyrrolidon.

Diesbezüglich beschreibt die EP 1193303 B1 eine Beschichtungszusammensetzung, welche schmutzabweisende und antiadhäsive Eigenschaften besitzt und wobei die Zusammensetzung ein Additiv umfasst, bei welchem an einer polymeren Hauptkette Polysiloxanseitenketten angebracht sind.

In der WO 2006/125731 wird ein Gleit- und Verlaufsadditiv durch radikalische Copolymerisation wenigstens eines Mono- oder Diperfluoresters einer ungesättigten Dicarbonsäure, wenigstens eines endständig reaktiven Polysiloxans und wenigstens eines vinylischen Monomers erhalten.

Hinsichtlich kosmetischer Zusammensetzungen beschreibt die EP 0931537 B1 die Dispersion von organischen und anorganischen Pulvern in ölhaltigen Zusammensetzungen mit Hilfe von Polysiloxan enthaltenden Verbindungen. Die Polymere werden durch radikalische Copolymerisation vinylischer Polysiloxan-Makromonomere mit anderen vinylischen Monomeren hergestellt, wobei die anderen vinylischen Monomere eine stickstoffhaltige Gruppe, eine Polyoxyalkylengruppe, eine anionische Gruppe oder eine Polylactongruppe enthalten.

In gleicher Weise beschreibt die US 2004/0156809 A1 die Oberflächenbehandlung von Pulvern mittels eines Acryl/Silikon-Copolymers, welches mindestens eine hydrolysierbare Silylgruppe im Molekül trägt.

Es wird eine Vielzahl von Substanzen als Dispergiermittel für Pigmente und Füllstoffe verwendet. Neben sehr einfachen Verbindungen mit niedriger Molekularmasse, wie beispielsweise Fettsäuren und deren Salzen oder Alkylphenolethoxylaten, werden auch komplexe Strukturen verwendet. Die Systeme, die als Benetzungs- und Dispersionsadditive verwendet werden, umfassen auch Epoxidaddukte und deren Salze. Die US 2005/0020735 enthält einen Überblick der auf diesem Gebiet existierenden Patentliteratur.

Die WO 2008/092687 A1 und WO 2005/113676 A1 beschreiben beispielsweise Benetzungs- und Dispergieradditive mit einer Kamm- oder Pfropfcopolymerstruktur basierend auf Epoxy/Amin-Addukten, welche Polyetherseitenketten tragen.

Während die Verbindungen des Stands der Technik eine akzeptable Stabilität der Pigmentdispersion liefern, besteht noch immer ein Bedarf an verbesserten Systemen, um die Sedimentation von Pigmenten herabzusetzen, die Farbtreue von Pigmentdispersionen zu erhöhnen und eine breitere Kompatibilität von Copolymeren hinsichtlich unterschiedlicher Zusammensetzungen zu gewährleisten, wie beispielsweise die Kompatibilität mit sehr unpolaren Zusammensetzungen, wie ölund silikonbasierten Formulierungen. Des Weiteren neigen Oberflächenadditive aus dem Stand der Technik häufig zur Schaumbildung oder zu einer Verschlechterung des visuellen Eindrucks der späteren Beschichtung, weshalb eine Reduzierung der Schaumbildung und eine Optimierung des Verlaufes, der Trübung und der Kraterbildung bei gleichzeitiger Beibehaltung oder Verbesserung des Oberflächenmodifizierenden Effekts angestrebt werden.

Die Aufgaben konnten durch Copolymere gelöst werden, die mindestens eine an das Grundgerüst des Copolymers angeknüpfte Polysiloxan-Gruppe enthalten, wobei dieses Grundgerüst ein Addukt mindestens eines Amins und mindestens eines Epoxids ist. Vorzugsweise wird an das Grundgerüst dieser Epoxy/Amin-Copolymere die Polysiloxan-Gruppe über ein monoaminofunktionelles Polysiloxan (B) und/oder über ein monoisocyanatfunktionelles Polysiloxan (C) in das Copolymer eingeführt. Dabei ist das Polysiloxan-Gruppen enthaltende Epoxy/Amin-Copolymer (i) ein Reaktionsprodukt aus mindestens einem Epoxid und mindestens einem Amin, wobei wenigstens das mindestens eine Amin

ein monoaminofunktionelles Polysiloxan (B) ist oder (ii) das Reaktionsprodukt zwischen mindestens einem Epoxid und mindestens einem polysiloxanfreien Amin (D), welches anschließend mit mindestens einem monoisocyanatfunktionellen Polysiloxan (C) zur Reaktion gebracht wird.

Bevorzugt werden die an das Epoxy/Amin-Grundgerüst angeknüpften PolysiloxanGruppen auf den folgenden Wegen in das Zielprodukt eingeführt.

(1) Bei der Reaktion eines Epoxides (A) mit einem Amin ist wenigstens eine der Aminverbindungen ein monoaminofunktionelles Polysiloxan (B), oder

(2) mindestens ein monoisocyanatfunktionelles Polysiloxan (C) wird nach der Reaktion zwischen einem Epoxid und einem Amin mit dem Reaktionsprodukt daraus zur Reaktion gebracht, oder

(3) bei der Reaktion eines Epoxides (A) mit einem Amin ist wenigstens eine der Aminverbindungen ein monoaminofunktionelles Polysiloxan (B) und mindestens ein monoisocyanatfunktionelles Polysiloxan (C) wird nach der Reaktion zwischen einem Epoxid und einem Amin mit dem Reaktionsprodukt daraus zur Reaktion gebracht.

Auf diese Weise können die Copolymere folgendermaßen erhalten werden:

(A) + (B)

(A) + (B) + (D)

(A) + (C) + (D)

(A) + (B) + (C)

(A) + (B) + (C) + (D)

Die Copolymere können gegebenenfalls auch versalzt oder quaternisiert sein. Die Versalzung bzw. die Quaternisierung kann nach dem Fachmann bekannten Verfahren erfolgen. Bevorzugte Verfahren werden im Folgenden noch beschrieben.

Die Komponenten (A), (B), (C) und (D) der vorliegenden Erfindung werden im Folgenden näher beschrieben.

**Komponente (A): mono- oder polyfunktionelles Epoxid**

Es ist möglich, als Komponente (A) aromatische und/oder aliphatische und/oder Polyalkylenoxid enthaltende Epoxide zu verwenden. Die Epoxide können eine oder mehrere, vorzugsweise zwei Epoxygruppen pro Molekül enthalten und besitzen vorzugsweise wenigstens sechs Kohlenstoffatome. Mischungen unterschiedlicher Epoxide können ebenfalls eingesetzt werden.

In einer bevorzugten Ausführungsform der vorliegenden Erfindung werden als Epoxide die Epoxide (A), welche sich durch die folgende allgemeine Formel (I) darstellen lassen, eingesetzt:

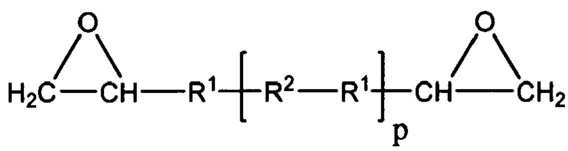

(I),

worin alle $R^1$ unabhängig voneinander für $-CH_2-O-$, $-O-CH_2-$ oder $-CH_2-$ stehen, alle $R^2$ unabhängig voneinander für Alkylenreste, Cycloalkylenreste, Arylenreste oder Aralkylenreste stehen und p = 1-8 ist.

Noch bevorzugter werden Glycidylether von Polyolen eingesetzt, die im Allgemeinen unter der Bezeichnung Epoxyharze bekannt sind, einschließlich verschiedener Epoxyharze, wie konventioneller kommerziell erhältlicher Epoxyharze. In einer bevorzugten Ausführungsform der vorliegenden Erfindung ist Komponente (A) ein Diepoxid der allgemeinen Formel (I'):

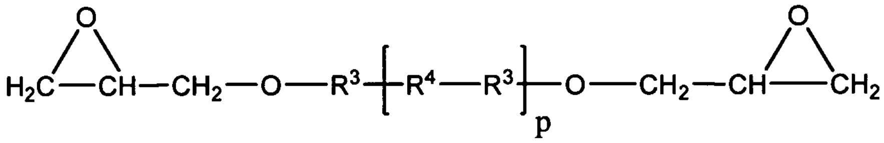

(I')

worin alle $R^3$ unabhängig voneinander für Alkylenreste, Cycloalkylenreste, Arylenreste oder Aralkylenreste stehen, alle $R^4$ unabhängig voneinander für O oder Alkylenreste stehen und p = 0-8 ist.

Bevorzugte Beispiele aus der Gruppe der aromatischen Polyepoxide sind Reaktionsprodukte von Diphenylolpropane (Bisphenol A) mit Epichlorhydrin und die höheren Homologe davon, die beispielsweise unter den Handelsbezeichnungen D.E.R. oder Epikote (von Dow Chemical Company oder Hexion Specialty Chemicals) erhältlich sind. Beispiele aliphatischer Polyepoxide sind 1,6-Hexandiglycidylether und 1,4-Butandiglycidylether. Diese aliphatischen Polyepoxide sind beispielsweise unter den Handelsbezeichnungen Grilonit (von EMS-Chemie) erhältlich.

Die aliphatischen Polyepoxide können darüber hinaus Sauerstoff in der Kette enthalten, wie Polypropylenglykoldiglycidylether, Polyethylenglykoldiglycidylether oder Polytetrahydrofurandiglycidylether. Die Polyethylenglykoldiglycidylether sind beispielsweise unter den Handelsnahmen Epiol E-400 oder Epiol E-1000 (von NOF Corporation) erhältlich.

Ganz besonders bevorzugt ist der Einsatz von Reaktionsprodukten von Diphenylolpropan (Bisphenol A) mit Epichlorhydrin und die höheren Homologe davon sowie 1,6-Hexandiglycidylether.

**Komponenten, die Polysiloxangruppen enthalten: Monoaminofunktionelle Polysiloxane (B) und monoisocyanatfunktionelle Polysiloxane (C)**

Es ist erfindungswesentlich, dass die Copolymere der vorliegenden Erfindung wenigstens eine ans Grundgerüst angeknüpfte Polysiloxan-Gruppe enthalten. Die Polysiloxan-Gruppen enthaltenden Gruppen stammen vorzugsweise aus monoaminofunktionellen Polysiloxanen (B) und/oder aus einem monoisocyanatfunktionellen Polysiloxan (C). Die Polysiloxan-Gruppen werden vorzugsweise über ein monoaminofunktionelles Polysiloxan (B) und/oder über ein monoisocyanatfunktionelles Polysiloxan (C) in das Copolymer eingefügt. Die Komponenten (B) und (C) werden im Folgenden genauer beschrieben.

**Komponente (B): Monoaminofunktionelles Polysiloxan**

Bevorzugt wird als Komponente (B) ein monoaminofunktionelles Polysiloxan der folgenden Formel verwendet:

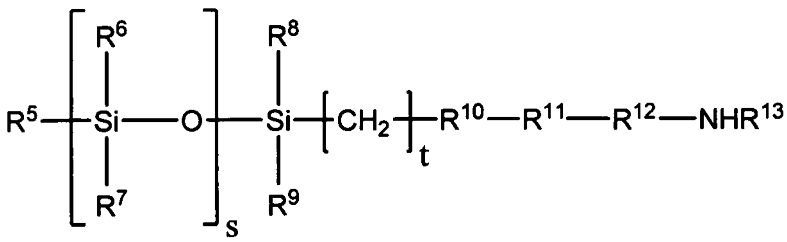

,

worin $R^5$ für einen halogenierten Alkylrest mit 1 bis 30 Kohlenstoffatomen, einen gesättigten linearen Alkylrest mit 1 bis 30 Kohlenstoffatomen, einen gesättigten verzweigten oder zyklischen Alkylrest mit 3 bis 30 Kohlenstoffatomen oder einen Arylrest, einen Alkylarylrest oder einen Arylalkylrest mit 6 bis 30 Kohlenstoffatomen steht, vorzugsweise für einen Methylrest oder einen Butylrest,

alle $R^6$ und $R^7$ unabhängig voneinander für gesättigte lineare Alkylreste mit 1 bis 6 Kohlenstoffatomen, gesättigte verzweigte oder zyklische Alkylreste mit 3 bis 6 Kohlenstoffatomen, ungesättigte Alkylreste mit 2 bis 6 Kohlenstoffatomen oder Arylreste, Alkylarylreste oder Arylalkylreste mit 6 bis 12 Kohlenstoffatomen stehen, vorzugsweise für Methyl-, Ethyl-,

Propyl-, Butyl- oder fluorierte Alkylreste mit 1 bis 30 Kohlenstoffatomen oder Phenyl- oder substituierte Phenylreste, besonders bevorzugt für Methylreste,

alle $R^8$ und $R^9$ unabhängig voneinander für $R^5[SiR^6R^7O]_s$ ,wobei $R^5$, $R^6$ und $R^7$ wie oben definiert sind und unabhängig davon ausgewählt sind, gesättigte lineare Alkylreste mit 1 bis 6 Kohlenstoffatomen, gesättigte verzweigte oder zyklische Alkylreste mit 3 bis 6 Kohlenstoffatomen, Alkenreste mit 2 bis 6 Kohlenstoffatomen oder Arylreste, Alkylarylreste oder Arylalkylreste mit 6 bis 12 Kohlenstoffatomen stehen, vorzugsweise für Methyl-, Ethyl-, Propyl-, Butyl- oder fluorierten Alkylreste oder Phenyl- oder substituierte Phenylreste, besonders bevorzugt für Methylreste,

s = 1 bis 400 und t = 2 bis 30 ist,

$R^{10}$ für $(CH_2)_u$, O, S oder $C_6R^{14}{}_4$ steht, wobei u = 0 oder 1 ist und alle $R^{14}$ unabhängig voneinander für Wasserstoff oder einen Alkylrest mit 1 bis 6 Kohlenstoffatomen stehen,

$R^{11}$ für $(CH_2)_v$ oder $(CH_2CHR^{15}O)_w$ steht, wobei v = 0 bis 30 und w = 0 bis 50 ist und alle $R^{15}$ unabhängig voneinander für Wasserstoff, einen gesättigten linearen Alkylrest mit 1 bis 6 Kohlenstoffatomen, einen gesättigten verzweigten Alkylrest mit 3 bis 6 Kohlenstoffatomen oder einen zyklischen Alkylrest mit 4 bis 6 Kohlenstoffatomen,

$R^{12}$ für $(CH_2)_x$ mit x = 0 bis 3 steht und

$R^{13}$ für Wasserstoff, einen gesättigten linearen Alkylrest mit 1 bis 6 Kohlenstoffatomen, einen gesättigten verzweigten Alkylrest mit 3 bis 6 Kohlenstoffatomen oder einen Arylrest, einen Alkylarylrest oder einen Arylalkylrest mit 6 bis 9 Kohlenstoffatomen steht. Vorzugsweise ist $R^{13}$ Wasserstoff und es handelt sich um eine primäre Amingruppe.

Vorzugsweise wird $[CH_2]_tR^{10}R^{11}R^{12}NHR^{13}$ repräsentiert durch einen 2-Aminoethylrest, 3-Aminopropylrest, 3-Aminopropylethyletherrest oder 6-Aminohexylrest. Vorzugsweise ist der an der Polysiloxankette endständige Aminogruppen enthaltende funktionelle Rest $[CH_2]_tR^{10}R^{11}R^{12}NHR^{13}$ ein 3-Aminopropylrest.

Der Organopolysiloxanrest $R^5[SiR^6R^7O]_sSiR^BR^9$ der Komponente (B) besitzt vorzugsweise eine lineare oder verzweigte Struktur und besitzt vorzugsweise ein zahlenmittleres Molekulargewicht im Bereich von 200 bis 30000, bevorzugter im Bereich von 500 bis 10000, und noch bevorzugter im Bereich von 500 bis 5000 g/mol.

Die Synthese monoaminofunktioneller Polysiloxane wird weiter unten beschrieben.

**<u>Komponente (C): Monoisocyanatfunktionelles Polysiloxan</u>**

Bevorzugt wird als Komponente (C) ein monoisocyanatfunktionelles Polysiloxan (C) der folgenden Formel verwendet:

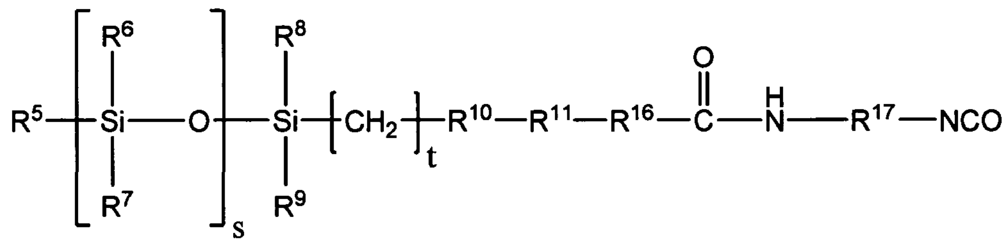

,

worin $R^5$, $R^6$, $R^7$, $R^8$, $R^9$, $R^{10}$, $R^{11}$, s und t wie für Komponente (B) definiert sind,

$R^{16}$ für O, S oder NH steht, worin $R^{16}$ entfällt, wenn w mindestens 1 ist, und

$R^{17}$ für einen gesättigten linearen Alkylenrest mit 1 bis 30 Kohlenstoffatomen, einen gesättigten verzweigten oder zyklischen Alkylenrest mit 3 bis 30 Kohlenstoffatomen oder einen Arylenrest, einen Alkylarylenrest oder einen Arylalkylenrest mit 6 bis 30 Kohlenstoffatomen steht. Vorzugsweise steht $R^{17}$ für den Rest eines Diisocyanats ohne die NCO-Gruppen.

Als Isocyanat werden bevorzugt aliphatische, cycloaliphatische oder araliphatische Isocyanate eingesetzt. Zum Beispiel werden Aryl-substituierte aliphatische Diisocyanate eingesetzt, wie beschrieben in Houben-Weyl, Methoden der Organischen Chemie, Volume 14/2, Seiten 61-70 und in einem Artikel von W. Siefken, Justus Liebig's Annalen der Chemie 562, Seiten 75-136. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Tri-methyl-1,6-hexamethylendiisocyanat (TMDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanate, IPDI), 1,4-Diisocyanatomethyl-2,3,5,6-tetramethylcyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4-und/oder 2,6-Toluoldiisocyanat, Perhydro-2,4'-diphenylmethandiisocyanat, Perhydro-4,4'-diphenylmethandiisocyanat ($H_{12}MDI$), 4,4'-Diisocyanato-3,3',5,5'-tetramethyldicyclohexylmethan,

4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, sowie jede Mischung dieser Verbindungen. Weitere bevorzugte Isocyanate werden beschrieben in dem genannten Arktikel von *Siefken* auf Seiten 122 ff. 2,5(2,6)-Bis(isocyanatomethyl)bicyclo[2.2.1]heptan (NBDI) ist bevorzugt in reiner Form oder als Teil eines Gemisches. Besonders bevorzugt sind die technisch einfach zu erhaltenen aliphatischen und cycloaliphatischen Isocyanate und deren Isomerengemische.

Ganz besonders bevorzugt ist $R^{17}$ der Rest von 2,4-Toluoldiisocyanat, 2,6-Toluoldiisocyanat oder einem Gemisch dieser Reste oder der Rest von Isophorondiisocyanat (IPDI), jeweils ohne die NCO-Gruppen.

Der Organopolysiloxanrest $R^5[SiR^6R^7O]_sSiR^8R^9$ der Komponente (C) besitzt vorzugsweise eine lineare oder verzweigte Struktur und besitzt vorzugsweise ein zahlenmittleres Molekulargewicht im Bereich von 200 bis 30000, bevorzugter im Bereich von 500 bis 10000, und noch bevorzugter im Bereich von 500 bis 5000 g/mol.

Die Synthese der monoisocyanatfunktionellen Polysiloxane (C) wird weiter unten beschrieben.

Eine Möglichkeit zur Herstellung linearer, monofunktioneller Polysiloxane ist die Äquilibrierung zyklischer und offenkettiger Polydialkylsiloxane mit endständig difunktionellen Polysiloxanen, wie z.B. endständigen -SiH oder -$NH_2$ difunktionellen Polydialkylsiloxanen, oder sogenannten funktionellen Blockern, wie bei Noll (Chemie und Technologie der Silicone, VCH, Weinhelm, 1984) und Yigör, I. und McGrath, J. E. (Polysiloxane Containing Copolymers: A Survey of Recent Development; Advances in Polymer Science; Springer-Verlag: New York, 1988; Vol. 86) beschrieben: Aus statistischen Gründen besteht das Reaktionsprodukt aus einer Mischung zyklischer, difunktioneller, monofunktioneller und nicht funktioneller Polysiloxane. Der Anteil an linearen Polysiloxanen im Reaktionsgemisch kann durch eine destillative Entfernung der niederen Zyklen erhöht werden. Innerhalb der linearen Polysiloxane sollte der Anteil monofunktioneller Polysiloxane im Reaktionsprodukt der Äquilibrierung möglichst hoch sein. Je nach Verhältnis der Edukte bei der Synthese der Copolymeren können difunktionelle Polysiloxane zur unerwünschten Vernetzung führen und je nach Anwendung können nicht funktionelle Polysiloxane zu Trübungen und Unverträglichkeiten führen.

Bevorzugt werden streng mono-SiH-funktionelle Polysiloxane eingesetzt, das heißt solche, die nur eine Silan-Wasserstoff-Gruppe aufweisen. Die Synthese dieser linearen monofunktionellen Polysiloxane kann beispielsweise über eine lebende anionische Polymerisation zyklischer Polysiloxane, z.B. Hexamethylencyclotrisiloxan, erfolgen. Dieses Verfahren ist unter anderem bei T. Suzuki in Polymer, 30 (1989) 333 beschrieben. Die Reaktion wird beispielhaft in folgendem Reaktionsschema dargestellt:

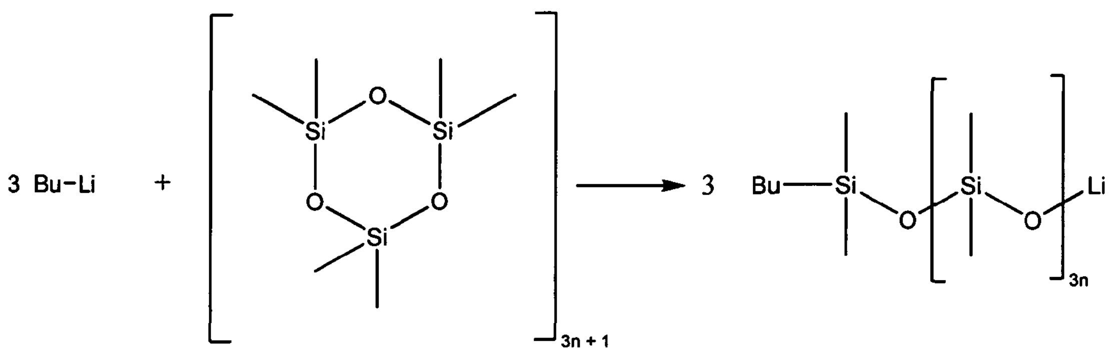

Die $SiHMe_2$-Funktionalisierung der Endgruppe kann mit funktionellen Chlorsilanen, beispielsweise Dimethylchlorsilan, analog dem folgenden Reaktionsschema nach dem Durchschnittsfachmann bekannten Verfahren erfolgen.

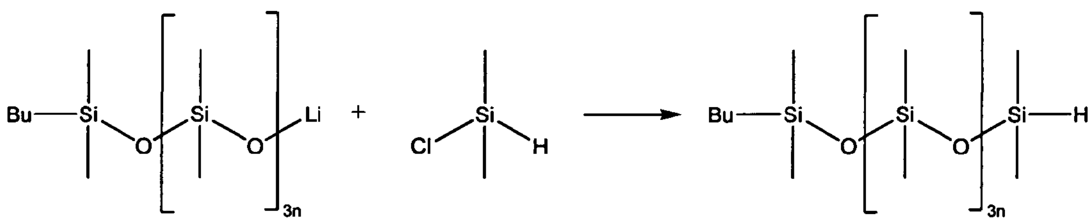

Wenn verzweigte SiH-funktionelle Polysiloxane gewünscht werden, können Monomethyldichlorsilan oder Trichlorsilan zur SiH-Funktionalisierung der Endgruppe eingesetzt werden.

Die SiH-funktionellen Polysiloxane werden in einer Hydrosilylierungsreaktion mit einem (endständigen) ethylenisch ungesättigten Amin, wie allylische oder vinylische Amine, zu monoaminofunktionellen Polysiloxanen umgesetzt. Im Folgenden ist das exemplarisch für Allylamin beschrieben.

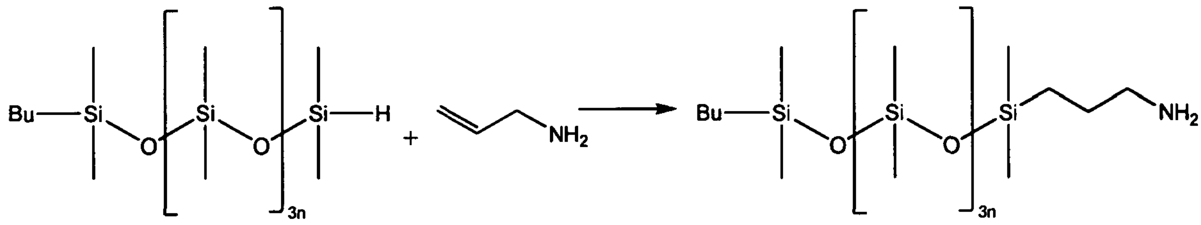

Typischerweise erfolgt die Hydrosilylierung unter den folgenden Bedingungen: Das SiH-funktionelle Polysiloxan wird bei Raumtemperatur vorgelegt. Unter einer Stickstoffatmosphäre wird dann der Reaktorinhalt beispielsweise auf 85°C bis 140°C erwärmt. Ein Hydrosilylierungkatalysator, wie z.B. die üblicherweise verwendeten Speiers- oder Karstedt-Katalysatoren, wird zugesetzt. Abhängig von der zu erwartenden Exothermie der Reaktion wird ein Teil oder die Gesamtmenge der Allylverbindungen zugegeben. Durch die dann ablaufende exotherme Reaktion steigt die Temperatur. Normalerweise wird versucht, die Temperatur in einem Bereich von 90°C bis 120°C zu halten. Falls ein Teil der Allylverbindungen noch zudosiert werden muss, erfolgt die Zugabe in der Art, daß die Temperatur im Bereich von 90°C bis 120°C bleibt. Nach vollständiger Zugabe wird die Temperatur noch für einige Zeit bei 90°C bis 120°C gehalten. Der Ablauf der Reaktion kann durch eine gasvolumetrische Bestimmung der verbleibenden SiH-Gruppen oder durch Infrarot-Spektroskopie (Absorptionsbande des Siliciumhydrids bei 2150 $cm^{-1}$) verfolgt werden.

Monoisocyanatofunktionelle Polysiloxane können nach den Verfahren, wie sie in DE 199 19 482 A1 beschrieben sind, hergestellt werden. Dazu können monohydroxyfunktionelle Polysiloxanverbindungen mit einem Überschuss an Diisocyanat, bevorzugt 2,4-Toluoldiisocyanat, 2,6-Toluoldiisocyanat, bzw. Isomerengemische aus 2,4-Toluoldiisocyanat und 2,6-Toluoldiisocyanat oder Isophorondiisocyanat, umgesetzt werden und der nicht umgesetzte Anteil des Diisocyanates wird vorzugsweise wieder aus dem Reaktionsgemisch entfernt. Durch einen Überschuss an Diisocyanat werden Kopplungsprodukte (Diaddukte) mit zwei Urethanbindungen vermieden. Solche nicht NCO-funktionellen Diaddukte können nicht weiter umgesetzt werden und können nachher bei der Reaktion nicht mit einreagieren. Je nach Anwendung können nicht funktionelle Polysiloxane zu Trübungen und Unverträglichkeiten führen.

Geringe Anteile von restlichem Diisocyanat können bei der Synthese der Produkte zur Vernetzung führen. Durch die Reinigung des Reaktionsgemisches, vorzugsweise mittels eines Dünnschichtverdampfers, können die Anteile jedoch sehr gering gehalten werden. Bevorzugt weisen die monoisocyanatofunktionellen Polysiloxane (C) daher nur sehr geringe (< 1 Gew.-%), besonders bevorzugt keine Anteile, von restlichen Diisocyanaten auf.

**Komponente (D): Polysiloxanfreie Amine**

Vorzugsweise werden als Komponente (D) polysiloxanfreie Amine (D) der folgenden Formel (II) zum Aufbau des Grundgerüstes des Copolymers verwendet:

$$HR^{18}N\text{-}R^{19} \qquad (II)$$

worin $R^{18}$ für Wasserstoff, einen Alkylrest, einen Cycloalkylrest, einen Arylrest oder einen Aralkylrest steht und
$R^{19}$ für einen Alkylrest, einen Cycloalkylrest, einen Arylrest, einen Aralkylrest, $R^{20}$-Z oder $CHR^{21}CH_2(OCH_2CH_2)_q(OCHR^{22}CH_2)_r$-O-$R^{23}$ steht, wobei
$R^{20}$ für einen Alkylenrest steht,
Z für einen heterozyklischen Rest steht,
$R^{21}$ für Wasserstoff, einen Alkylrest mit 1 bis 4 Kohlenstoffatomen oder einen Arylrest steht,
alle $R^{22}$ unabhängig voneinander für Alkylreste mit 1 bis 4 Kohlenstoffatomen oder Arylreste stehen,
$R^{23}$ für einen Alkylrest mit 1 bis 12 Kohlenstoffatomen, einen Cycloalkylrest mit 3 bis 12 Kohlenstoffatomen oder einen Arylrest mit 6 bis 12 Kohlenstoffatomen steht und q und r unabhängig voneinander für ganze Zahlen von 0 bis 100 stehen, unter der Voraussetzung, dass wenigstens eines der Indices q und r nicht 0 beträgt.

Vorzugsweise ist $R^{18}$ = H. Die aliphatischen, cycloaliphatischen, aromatischen oder araliphatischen Amine der Komponente (D) besitzen vorzugsweise 3 bis 28 Kohlenstoffatome. Typische Beispiele sind Propylamin, Butylamin und Benzylamin.

In einer bevorzugten Ausführungsform trägt das polysiloxanfreie Amin (D) der Formel (II) eine weitere funktionelle Gruppe. Das Amin mit der weiteren funktionellen Gruppe kann zusätzlich zu dem oben genannten polysiloxanfreien Amin ohne weitere funktionelle Gruppe eingesetzt werden oder an dessen Stelle eingesetzt werden. Bevorzugt wird mindestens ein polysiloxanfreies Amin (D) der Formel (II) zum Aufbau des Copolymers verwendet, wobei das polysiloxanfreie Amin (D) mindestens eine, vorzugsweise eine weitere funktionelle Gruppe trägt. Als zusätzliche funktionelle Gruppen sind insbesondere solche bevorzugt, die unter den verwendeten Reaktionsbedingungen nicht mit Epoxiden reagieren. Bevorzugte funktionelle Gruppen sind Hydroxylgruppen, tertiäre Aminogruppen oder Doppelbindungen. Geeignete Amine, die eine zusätzliche funktionelle Gruppe tragen sind beispielsweise Ethanolamin, Butanolamin, 2-Amino-2-methyl-1-propanol, 3-(Dimethylamino)-1-propylamin, Oleylamin. Geeignete Amine, die mehr als eine zusätzliche funktionelle Gruppe tragen sind beispielsweise 2-Amino-2-ethyl-1,3-propandiol oder 2-Amino-2-hydroxymethyl-1,3-propandiol. Besonders bevorzugt sind Ethanolamin, Butanolamin, 3-(Dimethylamino)-1-propylamin und Oleylamin.

Als Komponente (D) kann auch ein Amin mit $R^{20}$ = ein Alkylenrest und Z = ein heterozyklischer Rest verwendet werden. Derartige Amine sind vorzugsweise heterozyklische Verbindungen mit 5- oder 6-gliedrigen Ringen enthaltend vorzugsweise Stickstoff und/oder Sauerstoff als Heteroatome, wie beispielsweise N-(3-Aminopropyl)imidazol oder N-(2-Amino-ethyl)morpholin.

Als Komponente (D) können auch Polyoxyalkylenamine verwendet werden, in denen $R^{18}$ = H oder Alkylgruppe mit 1 bis 12 Kohlenstoffatomen und $R^{19} = CHR^{21}CH_2(O\ CH_2CH_2)_q(OCHR^{22}CH_2)_r\text{-O-}R^{23}$ ist. Geeignete Polyoxyalkylenamine werden beispielsweise in der WO 96/20971, Seite 7, Zeile 22 bis Seite 10, Zeile 17 als Verbindungen offenbart, die einerseits primäre und/oder sekundäre Aminogruppen tragen und andererseits Reaktionsprodukte aus Alkylenoxiden als strukturelle Einheiten enthalten. Alkylenoxide, die beispielsweise verwendet werden können, sind Ethylenoxid, Propylenoxid, Butylenoxid, Styrenoxid oder Mischungen daraus. Das zahlenmittlere Molekulargewicht des Polyoxyalkylens kann 100 bis 12000 g/mol betragen. Bevorzugte Polyoxyalkylenamine besitzen ein zahlenmittleres Molekulargewicht von etwa 1000 bis 3000 g/mol. Diese Polyoxyalkylenamine sind beispielsweise unter den Handelsbezeichnungen Jeffamine und Surfamine von der Firma Huntsman LLC Houston, Texas erhältlich.

Vorzugsweise werden primäre monoaminofunktionelle Amine als Komponente D eingesetzt.

Eine besonders bevorzugte Ausführungsform der Erfindung umfasst Polysiloxan-Gruppen enthaltene Copolymere, deren Grundgerüst ein Addukt aus Diepoxiden und monoaminofunktionellen Aminen ist. Vorzugsweise sind die verwendeten Amine primär und weiterhin von Vorteil ist, wenn das Grundgerüst einem aminofunktional terminierten Copolymer entspricht.

## Verfahren zur Herstellung der Copolymere

Die vorliegende Erfindung betrifft des Weiteren ein Verfahren zur Herstellung der erfindungsgemäßen Copolymere, wobei das Grundgerüst der Copolymere durch Umsetzung mindestens eines Epoxides mit mindestens einem Amin aufgebaut wird und dass an dem Grundgerüst mindestens eine Polysiloxan-Gruppe angeknüpft wird. Vorzugsweise wird die Polysiloxan-Gruppe in das Epoxy/Amin-Copolymer

(a) durch die Reaktion eines Epoxids mit einem monoaminofunktionellen Polysiloxan (B)
und/oder
(b) durch die Reaktion eines Epoxy/Amin-Copolymers mit einem monoisocyanatfunktionellen Polysiloxan (C)
eingeführt.

Dafür stehen zwei Verfahren zur Verfügung, nach welchen die Herstellung der Copolymere, die mindestens eine Polysiloxan-Gruppe enthalten, vorzugsweise erfolgt.

Verfahren 1)

Nach einem ersten Verfahren wird das mindestens eine Epoxid (A) mit dem mindestens einen monoaminofunktionellen Polysiloxan (B) oder mit mindestens einem polysiloxanfreien Amin (D) und mindestens einem monoaminofunktionellen Polysiloxan (B) zur Reaktion gebracht. Mit anderen Worten wird das mindestens eine Epoxid (A) mit mindestens einem monoaminofunktionellen Polysiloxan (B) oder einer Mischung des monoaminofunktionellen Polysiloxans (B) mit einem polysiloxanfreien Amin (D) zur Umsetzung gebracht.

Des Weiteren können diese Polysiloxan-Gruppen enthaltenden Epoxy/Amin-Copolymere in einer nachfolgenden Reaktion mit monoisocyanatfunktionellen Polysiloxanen (C) zur Reaktion gebracht werden.

In einer Ausführungsform der Erfindung werden die Komponenten (A) und (B) oder eine Mischung der Komponenten (A) und (B) und (D) miteinander in einem stöchiometrischen Überschuss der Komponente (A) zur Reaktion gebracht, um epoxidterminierte Copolymere zu erhalten, oder in einem stöchiometrischen Überschuss der Komponente (B) oder der Mischung aus (B) und (D) zur Reaktion gebracht, um aminofunktional terminierte Copolymere zu bilden. Des Weiteren können die Komponenten (A) und (B) oder eine Mischung der Komponenten (A) und (B) und (D) auch

stöchiometrisch miteinander umgesetzt werden.

In einer bevorzugten Ausführungsform wird ein stöchiometrischer Überschuss der Komponente (B) oder der Mischung der Komponenten (B) und (D) eingesetzt, um aminofunktional terminierte Copolymere zu erhalten.

Verfahren 2)

Das mindestens eine Epoxid (A) wird mit dem mindestens einen polysiloxanfreien Amin (D) umgesetzt und anschließend mit dem wenigstens einen monoisocyanatfunktionellen Polysiloxan (C) zur Reaktion gebracht. Wie bereits für Verfahren 1) beschrieben, wird entweder ein Überschuss der Komponente (A) oder der Komponente (D) eingesetzt, um epoxid- oder aminofunktional terminierte Copolymere zu erhalten. In einer bevorzugten Ausführungsform der vorliegenden Erfindung werden aminofunktional terminierte Copolymere erhalten. Nach vollständiger Reaktion zwischen (A) und (D) wird das mindestens eine monoisocyanatfunktionelle Polysiloxan (C) nachfolgend zugegeben, um die Polysiloxan-Gruppe in das Molekül einzuführen. Eine Urethanbindung wird gebildet, wenn das monoisocyanatfunktionelle Polysiloxan (C) mit einer Hydroxylgruppe aus dem Epoxy/Amin-Addukt, welches die Hauptkette (Grundgerüst) bildet, zur Reaktion gebracht wird. Eine Harnstoffbindung wird gebildet, wenn das monoisocyanatfunktionelle Polysiloxan (C) beispielsweise an eine terminale Aminogruppe des Epoxy/Amin-Polymerrückgrats gebunden wird. Da das Verfahren statistisch erfolgt, wird üblicherweise eine Mischung aus Produkten mit Urethan- und Harnstoffgruppen vorliegen, über welche die Polysiloxane an die Hauptkette angebunden sind.

In einer bevorzugten Ausführungsform sind die Copolymere aminofunktional terminierte Copolymere, bevorzugt erhalten nach einem der obigen Verfahren. Solche aminofunktional terminierten Copolymere weisen eine zusätzlich verbesserte Lagerstabilität auf.

Zusätzlich zum Einsatz monofunktioneller Amine ist es auch möglich, eine kleinere Menge von Aminen mit zwei oder mehr Aminogruppen pro Molekül einzusetzen. Solche Verbindungen können verwendet werden, um das Molekulargewicht der erfindungsgemäßen Additionsverbindungen zu erhöhen, was zur Steuerung der Polymerarchitektur oder der Verträglichkeit von Vorteil ist.

Die Reaktion zur Herstellung von Copolymeren kann in einem Lösemittelsystem ausgeführt werden. Vorzugsweise wird jedoch die Reaktion in Masse nach den Verfahren, die dem Durchschnittsfachmann bekannt sind, durchgeführt. Die gewählten Reaktionstemperaturen hängen von der Reaktivität der Reaktanden ab. Viele Epoxide reagieren mit Aminen sogar bei Raumtemperatur. Für wenig reaktive Epoxide können jedoch Reaktionstemperaturen von bis zu 160°C notwendig sein. Besonders geeignete Reaktionstemperaturen zur Durchführung der Reaktion von Epoxiden mit Aminen liegen bei etwa 50 bis 150°C. Wo erforderlich können auch die dem Durchschnittsfachmann auf dem Gebiet bekannten Katalysatoren zur Beschleunigung der Reaktion eingesetzt werden. Das zahlenmittlere Molekulargewicht der Copolymere liegt bevorzugt im Bereich von 500 bis 200000 g/mol. Vorzugsweise liegt das zahlenmittlere Molekulargewicht im Bereich von 500 bis 50000 g/mol, und besonders bevorzugt im Bereich von 1000 bis 20000 g/mol.

## Beschreibung der Modifikationen

Die Copolymere, welche durch die Reaktion zwischen (A) und (B) oder (A), (B) und (D) oder (A), (C) und (D) oder (A), (B) und (C) oder (A), (B), (C) und (D) erhalten werden, stellen wertvolle Additive mit einem breiten Kompatibilitätsspektrum für Beschichtungsmittelzusammensetzungen, Pulverzusammensetzungen und polymere Formmassen dar. Sie können in der Form verwendet werden, in welcher sie erhalten werden. Die Copolymere können jedoch auch nachfolgend mittels polymeranalogen Reaktionen modifiziert werden. Um deren Eigenschaften für jeden individuellen Zweck an spezifische Erfordernisse anzupassen, kann es in einigen Fällen wünschenswert sein, die Produkte einer weiteren Modifikation zu unterwerfen. Geeignete Modifikationen basieren auf Reaktionen mit Epoxid-, Amin- oder Hydroxylgruppen, die in den erfindungsgemäßen Epoxy/Amin-Additionsverbindungen vorhanden sein können. Im Rahmen der Modifizierung können alle diese Gruppen oder auch nur einige dieser Gruppen zur Reaktion gebracht werden.

Die folgenden Modifikationsreaktionen können kombiniert werden, um beispielsweise mehrfach modifizierte Additionsverbindungen zu erhalten. Wenn zwei oder mehrere Modifikationsreaktionen nacheinander ausgeführt werden sollen, muss gewährleistet sein, dass eine ausreichende Anzahl reaktiver Gruppen für eine oder mehrere aufeinanderfolgende Reaktionen im Molekül erhalten bleiben. Besagte Modifikationen stellen vorteilhafte Ausführungsformen der vorliegenden Erfindung dar und können beispielsweise realisiert werden durch:

1. Reaktion der terminalen Aminogruppen mit Isocyanaten, Lactonen, zyklischen Carbonaten, Anhydriden oder Acrylaten
2. Versalzung, Alkylierung oder Oxidierung der Aminogruppen, um quaternäre Ammoniumsalze oder Stickstoffoxide zu erhalten
3. Zur Reaktion bringen der terminalen Epoxygruppen mit Aminen oder Säuren
4. Zur Reaktion bringen verbleibender Hydroxylgruppen mit Carbonsäuren Lactonen, Anhydriden und/oder Isocyanaten.

Die terminalen Aminogruppen und die verbleibenden Hydroxylgruppen können mit Isocyanaten, wie oben unter Punkt 1 und 4 beschrieben, umgesetzt werden. Die Harnstoff- oder Urethanbildung wird, wie dem Durchschnittsfachmann bekannt ist, durchgeführt.

Die Umwandlung der Hydroxylgruppe in eine Urethangruppe kann durchgeführt werden, wenn Hydroxylgruppen im Farbsystem störend sind. Ein Beispiel ist die Verwendung von Monoisocyanatopolyethern, -polyestern und/oder polyether/esterverbindungen, wie beispielsweise in WO 2008/092687 A1 beschrieben, um eine breitere Kompatibilität der Additive in Beschichtungsmittelsystemen zu gewährleisten. Ein weiteres Beispiel ist die Verwendung von Monoisocyanato-funktionellen Addukten von Perfluorogruppen enthaltenden Monoalkoholen und Diisocyanaten, um die Oberflächenenergie der Beschichtungen drastisch zu reduzieren.

Die freien verbleibenden Hydroxylgruppen der erfindungsgemäßen Additionsverbindungen können beispielsweise, wie unter Punkt 4 beschrieben, verestert werden. Die Veresterungsreaktion wird, wie dem Durchschnittsfachmann bekannt ist, durchgeführt. Sofern auch freie Aminogruppen im erfindungsgemäßen Additionsprodukt enthalten sind, ist es ratsam, diese vor der Veresterung in Salze zu überführen, um eine befriedigende Reaktionsgeschwindigkeit zu gewährleisten. Bei einer partiellen Umesterung bleiben Hydroxylgruppen erhalten, die weiter modifiziert werden können oder frei bleiben können. Die freien Hydroxylgruppen können mit dem Beschichtungssystem reagieren. Es können beispielsweise auch reaktive Doppelbindungen oder eine Säurefunktion eingeführt werden, indem die hydroxyfunktionellen oder aminofunktionellen Einheiten in der Hauptkette des Copolymers mit Maleinsäureanhydrid umgesetzt werden. Weitere geeignete Anhydride zur Einführung der Säurefunktion sind beispielsweise Bernsteinsäureanhydrid, Phthalsäureanhydrid und Trimellitsäureanhydrid. Eine weitere Möglichkeit besteht in der Veresterung von hydroxyfunktionellen Einheiten innerhalb des Copolymers mit strukturell unterschiedlichen Anhydriden. Für eine bessere Wasserlöslichkeit kann die Säurefunktion beispielsweise auch in ein Salz umgewandelt werden, z.B. mit Alkanolaminen.

Darüber hinaus ist es möglich, durch nachfolgende Acrylierung und/oder Methacrylierung der Hydroxylgruppen Produkte zu erhalten, die sich sicher in Farbsysteme einführen lassen, insbesondere in Farbsysteme, die für die Strahlenhärtung vorgesehen sind, wie beispielsweise für die UV- oder Elektronenstrahlhärtung. Die terminale Aminogruppe kann auch mit Acrylaten, wie unter Punkt 1 beschrieben, zur Reaktion gebracht werden. So kann beispielsweise bei der Verwendung multifunktionaler Acrylate eine Einführung reaktiver Doppelbindungen in die Reaktionsprodukte erfolgen, die dann in strahlenhärtenden Verfahren einsetzbar sind.

Die Modifizierung der Aminogruppen, wie unter Punkt 2 beschrieben, findet nach dem Durchschnittsfachmann bekannten Verfahren statt. Eine Quaternisierung des Stickstoffatoms einer Aminogruppe kann beispielsweise unter Verwendung von Alkyl-oder Aralkylhalogeniden, Halogencarbonsäureestern oder Epoxiden erfolgen.

**Beschreibung der Verwendung der Additive**

Weiterer Gegenstand der Erfindung ist die Verwendung der Copolymere als Additive in Beschichtungsmitteln, Kunststoffen oder Kosmetika.

**<u>Oberflächen-modifizierende Additive</u>**

**Verwendung der Copolymere als Additive**

Die erfindungsgemäßen Copolymere können als Additiv, wie Netz- und Dispergiermittel, Verlaufmittel, Entschäumer, Stabilisierungsmittel oder schmutz- und ölabweisendes Mittel, in Beschichtungsmitteln, Kunststoffen, Kosmetika oder homogenen Dispersionen, wie Pigment- und Füllstoffpräparationen, eingesetzt werden. Unter Kunststoffen werden polymere Formmassen und Thermoplaste verstanden.

Die Copolymere können zum Beispiel als Verlaufmittel in Beschichtungsmitteln eingesetzt werden, um beispielsweise die optischen Eigenschaften der resultierenden Beschichtung zu verbessern. Durch die Verwendung dieser Copolymere als Verlaufmittel kann beispielsweise auch der Glanz und/oder die Opaleszenz der Beschichtungsmittel bzw. Beschichtungen oder Kunststoffe verbessert werden.

Die Copolymere können zum Beispiel auch eingesetzt werden, um die Oberflächeneigenschaften von Beschichtungen, polymeren Formmassen und Thermoplasten zu verändern. Durch den Zusatz der Copolymere kann die Oberflächenenergie von Beschichtungen, polymeren Formmassen und Thermoplasten beeinflusst werden. Die Oberfläche kann hydrophiler oder auch hydrophober gestaltet werden, so dass die Haftung auf dieser Oberfläche verbessert wird oder aber auch vermindert wird, wodurch schmutzabweisende, leicht zu reinigende Oberflächen erhalten werden können. Im Allgemeinen werden durch eine Erhöhung der Oberflächenenergie hydrophilere Oberflächen erzielt, die leichter benetzt werden können und bessere Haftungsbedingungen bieten. Dagegen werden im Allgemeinen durch eine Verminderung der Oberflächenenergie hydrophobere Oberflächen erzielt, die schwieriger benetzt werden können und

schmutzabweisende, anti-adhäsive Eigenschaften aufweisen.

### Additive zur Erzielung schmutzabweisender, anti-adhäsiver Oberflächen

Durch den Zusatz der erfindungsgemäßen Copolymere zu Beschichtungsmitteln, polymeren Formmassen und Thermoplasten können schmutzabweisende, leicht zu reinigende, anti-adhäsive Oberflächen erzielt werden. In den entsprechenden Copolymeren führen die hydrophoben Silikonanteile zu den zu erzielenden Eigenschaften, während das Backbone und mögliche hydrophilere Gruppen zur Verträglichkeit beitragen, wobei allerdings der Anteil der hydrophoben Gruppen überwiegt, um einen schmutzabweisenden Effekt zu erzielen. Die Copolymere können auch beispielsweise zusätzlich zu den enthaltenden Polysiloxan-Gruppen vergleichsweise hydrophobere Gruppen wie z.B. Perfluorogruppen enthalten. Solche Copolymere rufen üblicherweise auch eine drastische Verminderung der Oberflächenenergie hervor.

Beschichtungsmittel, polymere Formmassen und Thermoplaste, denen entsprechende Copolymere zugesetzt werden, weisen ausgezeichnete anti-adhäsive und schmutzabweisende Eigenschaften auf. Solche Beschichtungsmittelzusammensetzungen sind vorzugsweise Zusammensetzungen zur Herstellung von Antigraffiti-Beschichtungen, Trennbeschichtungen, selbstreinigenden Fassadenbeschichtungen, Eis-abweisenden Beschichtungen, z.B. für Flugzeuge, Autoradbeschichtungen, schmutzabweisenden Maschinen- bzw. Instrumentbeschichtungen, Marine-Beschichtungen (Anti-Fouling-Beschichtungen), schmutzabweisenden Möbelbeschichtungen und Trennpapierbeschichtungen.

Aufgrund des außergewöhnlich guten anti-adhäsiven Effekts der Beschichtungsmittelzusammensetzungen der vorliegenden Erfindung können selbst ölige Substanzen, wie beispielsweise Mineralöle, Gemüseöle oder ölige Präparationen, abgestoßen werden, so dass entsprechend beschichtete Behälter komplett von diesen Flüssigkeiten entleerbar sind. Dementsprechend sind die Beschichtungsmittelzusammensetzungen, welche mit den erfindungsgemäßen Additiven versehen wurden, geeignet, Doseninnenflächen zu beschichten bzw. Behälterinnenflächen zu beschichten. Darüber hinaus sind aufgrund der außerordentlich breiten Kompatibilität der Copolymere dieselben auch geeignet zur Herstellung transparenter Beschichtungsmittel.

Die Copolymere beeinträchtigen die anderen Eigenschaften, wie zum Beispiel Wetterbeständigkeit oder mechanische Beständigkeit, der Beschichtungsmittel bzw. Beschichtungen, polymeren Formmassen oder Thermoplaste nicht negativ. Dabei können die erfindungsgemäßen Copolymere den Beschichtungsmitteln, polymeren Formmassen oder Thermoplasten in relativ geringen Mengen (Additivmengen) zugesetzt werden. Insbesondere in Beschichtungsmitteln und Kunststoffen, wie polymeren Formmassen und Thermoplasten, können die Copolymere vorzugsweise auch in relativ geringen Mengen von 0,01 bis 5 Gew.-%, bevorzugt von 0,02 bis 2 Gew.-% und besonders bevorzugt von 0,03 bis 1 Gew.-%, jeweils bezogen auf die gesamte Zusammensetzung des Beschichtungsmittels oder des gesamten Kunststoffes, eingesetzt werden.

Die physikalischen Eigenschaften der ursprünglichen Beschichtungsmittel bzw. Beschichtungen, polymeren Formmassen und Thermoplasten, beispielsweise in Bezug auf Korrosionsschutz, Glanzerhaltung und Witterungsbeständigkeit, werden durch die geringen Konzentrationen des Additivs nicht oder nicht wesentlich beeinträchtigt. Beschichtungsmittel bzw. Beschichtungen, polymere Formmassen und Thermoplasten die die Copolymere enthalten, zeigen die gewünschten Eigenschaften in der Regel auch über einen Zeitraum von mehreren Jahren hinweg und behalten diese Eigenschaften auch über mehrere Reinigungszyklen hinweg bei.

Sofern die Copolymere freie Hydroxylgruppen enthalten, zeigte es sich als besonders vorteilhaft, dass die Hydroxylgruppen der Copolymere mit reaktiven Gruppen des Bindemittels vernetzen und somit ein dauerhafter Effekt durch die Copolymere gewährleistet wird.

### Additive zur Erzielung leicht benetzbarer Oberflächen

Die Copolymere können Beschichtungsmitteln, polymeren Formmassen und Thermoplasten zugesetzt werden, so dass durch deren Zusatz die Oberflächenenergie der Beschichtungen, polymeren Formmassen und Thermoplaste erhöht wird, wodurch die Benetzbarkeit dieser Oberflächen verbessert wird. In den entsprechenden Copolymeren ist der Anteil an hydrophilen Gruppen im Vergleich zu den hydrophoben Gruppen dominant. Das Copolymer hat insgesamt einen hydrophilen Charakter. In diesen Copolymeren führen geringe Mengen an hydrophoben Polysiloxan-Gruppen zu einer Orientierung der Copolymere an die Oberfläche von hydrophilen Medien und der dominante Anteil an hydrophilen Gruppen kann dann zur Erhöhung der Oberflächenenergie führen. Copolymere, die zur Erhöhung der Oberflächenenergie geeignet sind, enthalten dementsprechend zusätzlich zu den enthaltenen Polysiloxan-Gruppen noch vergleichsweise hydrophile Gruppen, z.B. auf Basis von alkoxylierten Verbindungen.

Beschichtungen, polymere Formmassen und Thermoplaste, denen entsprechende Copolymere zugesetzt werden, weisen ausgezeichnet benetzbare Oberflächen auf. Die Benetzbarkeit kann bestimmt werden, indem man nach den üblichen Methoden den Kontaktwinkel der Oberfläche gegen Wasser bestimmt. Für hydrophile Oberflächen soll der Kontaktwinkel < 60° betragen. Die Copolymere beeinträchtigen die anderen Eigenschaften, wie zum Beispiel Wetterbeständigkeit oder mechanische Beständigkeit, der Beschichtungsmittel bzw. Beschichtungen, polymeren Formmassen oder Thermoplaste nicht wesentlich. Dabei können diese Copolymere den Beschichtungsmitteln, polymeren Formmassen oder Thermoplasten in relativ geringen Mengen (Additivmengen) zugesetzt werden, beispielsweise in Mengen von 0,01 bis 5 Gew.-%, bevorzugt von 0,02 bis 2 Gew.-% und besonders bevorzugt von 0,03 bis 1 Gew.-%, jeweils bezogen auf die gesamte Zusammensetzung des Beschichtungsmittels oder des gesamten Kunststoffes.

Die physikalischen Eigenschaften der ursprünglichen Beschichtungsmittel bzw. Beschichtungen, polymeren Formmassen und Thermoplaste, beispielsweise in Bezug auf Korrosionsschutz, Glanzhaltung und Witterungsbeständigkeit, werden durch die geringen Konzentrationen des Additivs nicht oder nur unwesentlich beeinträchtigt. Beschichtungsmittel bzw. Beschichtungen, polymere Formmassen und Thermoplaste, die die Copolymere enthalten, zeigen die gewünschten Eigenschaften in der Regel auch über einen Zeitraum von mehreren Jahren hinweg und behalten diese Eigenschaften auch über mehrere Reinigungszyklen hinweg bei.

Sofern die Copolymere noch Hydroxylgruppen tragen, zeigt es sich als besonders vorteilhaft, dass die Hydroxylgruppen der Copolymere mit reaktiven Gruppen des Bindemittels vernetzen können und somit einen dauerhaften Effekt gewährleisten.

Durch die Verwendung der Copolymere als Additive in Beschichtungsmitteln, polymeren Formmassen oder Thermoplasten können auch Oberflächen mit antistatischen Eigenschaften oder Antibeschlag-Eigenschaften erhalten werden. Entsprechend additivierte Oberflächen können sehr gut benetzt werden und können gegebenenfalls bei Überlackierung haftvermittlende Eigenschaften zeigen.

**Netz- und Dispergiermittel**

Die Copolymere können auch als Dispergiermittel eingesetzt werden, und zwar in den aus dem Stand der Technik bekannten Einsatzgebieten von Dispergiermitteln, wobei anstelle der oder zusammen mit den aus dem Stand der Technik bekannten Dispergiermitteln die erfindungsgemäßen Copolymere als Dispergiermittel eingesetzt werden. So können diese z.B. bei der Herstellung oder Verarbeitung von Lacken, Leder- und Textilfarben, Pasten, Pigmentkonzentraten oder kosmetischen Zubereitungen eingesetzt werden, insbesondere wenn diese Feststoffe wie Pigmente und/oder Füllstoffe enthalten.

In einem Aspekt der vorliegenden Erfindung betrifft diese ein Verfahren zur Herstellung einer homogenen Dispersion, wobei das Verfahren das Vermischen von mindestens einem Pigment und/oder Füllstoff in einem Träger, gewählt aus der Gruppe bestehend aus mindestens einem Silikonöl, mit Hilfe mindestens eines erfindungsgemäßen Copolymers umfasst. Diese Dispersionen stellen vorzugsweise Pigment- und/oder Füllstoffpräparationen da, die vorzugsweise für Beschichtungssysteme verwendet werden. Homogen in diesem Zusammenhang bedeutet, dass mit bloßem Auge keine Phasenseparation oder Uneinheitlichkeiten erkannt werden können. Die verschiedenen Bestandteile sind gleichmäßig in der homogenen Dispersion verteilt.

Ein weiterer Aspekt der vorliegenden Erfindung betrifft ein silikonvernetztes Produkt oder Beschichtungsmittel, welches die vorgenannte homogene Dispersion enthält, und ein Verfahren zur Beschichtung, indem die vorgenannte homogene Dispersion und ein reaktives Silikon vermischt werden und die Mischung gehärtet wird, um ein pigmentiertes/gefülltes silikonvernetztes Produkt oder Beschichtung zu erhalten.

Die reaktiven Silikone oder Bindemittel können in einer Vielzahl von Formen und Verbindungen vorliegen, wie beispielsweise als Silkonöle, Silikon mit hohem Festkörper, wasserbasierte Silikone, Silikonalkyde, silikonisierte Polyester oder silikonisierte Acrylharze. Die Vernetzung kann durch Feuchtigkeitshärtung, Hydrosilylierungshärtung, Strahlenhärtung oder eine kombinierte Strahlen- und thermische Härtung (Dual-Cure) erfolgen.

**Pigmente**

Pigmente sind pulver- oder plättchenförmige Farbmittel, die im Gegensatz zu Farbstoffen im umgebenden Medium unlöslich sind (vgl. dazu DIN 55943: 2001-10, Römpp Lexikon Lacke und Druckfarben, Georg Thieme Verlag 1998, Stichworte Farbmittel, Farbstoffe, Pigmente).

Unter Pigmenten im Sinne dieser Erfindung werden beispielsweise anorganische und organische Pigmente, Pigmentruße, Effektpigmente, wie beispielsweise Perlglanz-und/oder Metalleffektpigmente, Glitterpigmente sowie Mischungen hiervon verstanden.

Geeignete organische Pigmente umfassen beispielsweise Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen. Des Weiteren können die organischen Pigmente beispielsweise ausgewählt sein aus: Carmine, Carbon Black, Anilinschwarz, Azogelb, Chinacridon, Phthalocyaninblau. Beispiele hierfür sind: D & C Red 21 (Cl 45 380), D & C Orange 5 (Cl 45 370), D & C Red 27 (Cl 45 410), D & C Orange 10 (Cl 45 425), D & C Red 3 (Cl 45 430), D & C Red 7 (Cl 15 850), D & C Red 4 (Cl 15 510), D & C Red 33 (Cl 17 200), D & C Red 34 (Cl 15 880),D & C Yellow 5 (Cl 19 140), D & C Yellow 6 (Cl 15 985), D & C Green (Cl 61

570), D & C Yellow 10 (Cl 77 002), D & C Green 3 (Cl 42 053) und/ oder D & C Blue 1 (Cl 42 090).

Geeignete anorganische Pigmente umfassen beispielsweise Metalloxide bzw. andere in Wasser schwerlösliche oder zumindest im Wesentlichen unlösliche Metallverbindungen, insbesondere Oxide von Titan, beispielsweise Titandioxid (Cl 77891), Zink, Eisen, beispielsweise rotes und schwarzes Eisenoxid (Cl 77491 (rot), 77499 (schwarz)) oder Eisenoxidhydrat (Cl 77492, gelb), Zirkonium, Silizium, Mangan, Aluminium, Cer, Chrom sowie Mischoxide der genannten Elemente und deren Mischungen. Weitere geeignete Pigmente sind Bariumsulfat-, Zinksulfid-, Manganviolett-, Ultramarinblau- und Berliner Blau-Pigmente. Die Pigmente können oberflächenmodifiziert sein, wobei die Oberflächen durch die Modifizierung beispielsweise hydrophile, amphiphile oder hydrophobe Verbindungen bzw. Gruppen aufweisen können. Die Oberflächenbehandlung kann darin bestehen, dass die Pigmente nach für den Fachmann bekannten Verfahren mit einer dünnen hydrophilen und/oder hydrophoben anorganischen bzw. organischen Schicht versehen werden.

In Bezug auf Perlglanzpigmente können beispielsweise die im Folgenden aufgelisteten Arten bzw. Typen von Perlglanzpigmenten Verwendung finden:

- natürliche Perlglanzpigmente, wie z.B. "Fischsilber" (Guanin/Hypoxanthin-Mischkristalle aus Fischschuppen) und "Perlmutt" (vermahlene Muschelschalen),
- monokristalline Perlglanzpigmente, wie z.B. Bismuthoxychlorid (BiOCl) oder plättchenförmiges Titandioxid, und
- Schicht-Substrat-Perlglanzpigmente.

Geeignete zu beschichtende plättchenförmige transparente Substrate für die Schicht-Substrat-Perlglanzpigmente sind nichtmetallische, natürliche oder synthetische plättchenförmige Substrate. Die Substrate sind vorzugsweise im Wesentlichen transparent, bevorzugt transparent, d.h. für sichtbares Licht zumindest teilweise durchlässig.

Die plättchenförmigen transparenten Substrate können dabei aus der Gruppe von natürlichem Glimmer, synthetischem Glimmer, Glasflakes, $SiO_2$-Plättchen, $Al_2O_3$-Plättchen, Sericit, Kaolin, Graphit, Talkum, Polymerplättchen, plättchenförmigem Bismuthoxychlorid, plättchenförmigen Substraten, welche eine anorganischorganische Mischschicht umfassen, und deren Mischungen, ausgewählt sein.

Synthetische Substrate, wie beispielsweise Glasflakes oder synthetischer Glimmer, weisen glatte Oberflächen sowie eine einheitliche Dicke innerhalb eines einzelnen Substratteilchens auf. Somit bietet die Oberfläche nur wenig Streuzentren für einfallendes bzw. reflektiertes Licht und ermöglicht so nach Beschichtung höherglänzende Perlglanzpigmente als mit natürlichem Glimmer als Substrat. Als Glasflakes werden bevorzugt jene verwendet, die nach den in EP 0 289 240 A1, WO 2004/056716 A1 und der WO 2005/063637 A1 beschriebenen Verfahren hergestellt werden können bzw. welche die aus der EP 1 980 594 B1 bekannte Glaskomposition aufweisen.

Die Perlglanzpigmente können auch plättchenförmige transparente Substrate, beispielsweise Glasplättchen, als Substrat aufweisen, welche insbesondere beidseitig mit semitransparenten Metallschichten beschichtet sind. Die Metalle der semitransparenten Metallschichten sind bevorzugt aus der Gruppe von Silber, Aluminium, Chrom, Nickel, Gold, Platin, Palladium, Kupfer, Zink, Titan sowie deren Mischungen und Legierungen ausgewählt.

Das plättchenförmige transparente Substrat kann mit mindestens einer optisch wirksamen Schicht oder Beschichtung versehen werden, wobei die Schichten vorzugsweise Metalloxide, Metalloxidhydrate, Metallhydroxide, Metallsuboxide, Metalle, Metallfluoride, Metalloxyhalide, Metallchalcogenide, Metallnitride, Metalloxynitride, Metallsulfide, Metallcarbide und deren Mischungen umfassen. Gemäß einer bevorzugten Ausführungsform der vorliegenden Erfindung bestehen die optisch wirksamen Schichten oder Beschichtungen aus den vorstehend genannten Materialien.

Wird eine hochbrechende Schicht oder Beschichtung auf das plättchenförmige transparente Substrat aufgebracht, so liegt der Brechungsindex insbesondere bei $n \geq 1{,}8$, bevorzugt bei $n \geq 1{,}9$ und besonders bevorzugt bei $n \geq 2{,}0$. Im Falle einer niedrigbrechenden Schicht oder Beschichtung liegt der Brechungsindex bei insbesondere bei $n < 1{,}8$, bevorzugt bei $n < 1{,}7$ und besonders bevorzugt bei $n < 1{,}6$.

Als hochbrechende Schicht oder Beschichtung eignen sich beispielsweise $TiO_2$, $Fe_2O_3$, $Fe_3O_4$, $TiFe_2O_5$, $FeTiO_3$, ZnO, $SnO_2$, CoO, $Co_3O_4$, $ZrO_2$, $Cr_2O_3$ $VO_2$, $V_2O_3$, $Sb_2O_3$, $SnO_2$, $SbO_2$ und deren Mischungen. Bevorzugt werden $TiO_2$ und/oder $Fe_2O_3$ eingesetzt. Als niedrigbrechende Schicht oder Beschichtung sind beispielsweise $SiO_2$, $Al_2O_3$, $MgF_2$ und deren Mischungen geeignet.

Die plättchenförmigen transparenten Substrate der Perlglanzpigmente können mit einem ein- oder mehrlagigen Schichtaufbau aus Metalloxiden, Metallhydroxiden, Metallsuboxiden bzw. Metalloxidhydraten beschichtet werden, wobei die Reihenfolge der Schichten variabel sein kann. Die Metalloxide, Metallhydroxide, Metallsuboxide und/oder Metalloxidhydrate können auch nebeneinander in derselben Schicht vorliegen.

Ist das plättchenförmige transparente Substrat mit nur einer einzigen Metalloxidschicht beschichtet, so weist diese vorzugsweise einen hohen Brechungsindex auf. In Abhängigkeit von der geometrischen Metalloxidschichtdicke können derartige Perlglanzpigmente unterschiedliche Farbeffekte bewirken. Beispielsweise haben silberweiße Perlglanzpigmente mit einer $TiO_2$-Belegung und einer geometrischen $TiO_2$-Schichtdicke von 40 bis 60 nm die Farbe silber;

Interferenzpigmente haben mit einer $TiO_2$-Belegung und einer geometrischen $TiO_2$-Schichtdicke von 60 bis 80 nm die Farbe gelb, von 80 bis 100 nm die Farbe rot, von 100 bis 140 nm die Farbe blau, von 120 bis 160 nm die Farbe grün und von 280 bis 320 nm die Farbe grün (III. Ordnung); Farbglanzpigmente haben mit einer $Fe_2O_3$-Belegung und einer geometrischen $Fe_2O_3$-Schichtdicke von 35 bis 45 nm die Farbe bronze, von 45 bis 55 nm die Farbe kupfer, von 55 bis 65 nm die Farbe rot, von 65 bis 75 nm die Farbe rotviolett, von 75 bis 85 nm die Farbe rotgrün und mit einer $Fe_3O_4$-Belegung die Farbe schwarz; Kombinationspigmente haben mit einer $TiO_2$/$Fe_2O_3$-Belegung Goldtöne, mit einer $TiO_2$/$Cr_2O_3$-Belegung die Farbe grün und mit einer $TiO_2$/Berliner Blau-Belegung die Farbe tiefblau.

Die plättchenförmigen transparenten Substrate können auch mit einem mehrlagigen Schichtaufbau mit oder bestehend aus Metalloxid, Metallhydroxid, Metallsuboxid und/ oder Metalloxidhydrat beschichtet werden, wobei die Reihenfolge der Schichten variabel sein kann. Bevorzugt ist hierbei eine Schichtenfolge, bei dem wenigstens eine hochbrechende Schicht und wenigstens eine niedrigbrechende Schicht in alternierender Weise auf einem Substrat angeordnet sind. Bei der alternierenden Anordnung ist es auch möglich, ein oder mehrere hochbrechende Schichten unmittelbar übereinander und nachfolgend ein oder mehrere niedrigbrechende Schichten unmittelbar übereinander anzuordnen. Wesentlich ist jedoch, dass in dem Schichtaufbau hoch- und niedrigbrechende Schichten vorkommen. Vorzugsweise sind ausgehend vom Substrat wenigstens eine hoch-, niedrig- und wiederum hochbrechende Schicht angeordnet, was in Perlglanzpigmenten mit besonders intensiven Interferenzfarben resultiert.

Mit $TiO_2$ und/oder Eisenoxid beschichtete Perlglanzpigmente auf Basis von plättchenförmigem natürlichem Glimmer sind beispielsweise unter dem Namen Prestige von der Firma Eckart GmbH im Handel erhältlich. Besteht das plättchenförmige transparente Substrat aus synthetischem Glimmer, sind derartige Perlglanzpigmente z.B. unter dem Handelsnamen SynCrystal der Firma Eckart GmbH kommerziell erhältlich. Mit $TiO_2$ und/oder $Fe_2O_3$ beschichtete $Al_2O_3$-Flakes und entsprechend beschichtete $SiO_2$-Flakes werden beispielsweise unter dem Handelsnamen Xirona von der Firma Merck KGaA angeboten. Mit $TiO_2$ und/oder Eisenoxid beschichtete Glasflakes werden z.B. von der Firma Eckart GmbH unter dem Namen Mirage, von der Firma BASF Catalysts unter der Bezeichnung Reflecks oder von der Firma Merck KGaA unter der Bezeichnung Ronstar angeboten. Auch mehrschichtige Interferenzpigmente, wie sie z.B. in der DE 196 18 569 A1 beschrieben werden und aus einem Trägermaterial bestehen, das mit alternierenden Schichten von Metalloxiden mit niedriger und hoher Brechzahl beschichtet ist, können im Rahmen der vorliegenden Erfindung eingesetzt werden.

Außerdem sind auch Pigmente mit Interferenzeffekt, welche kein Substrat aufweisen, beispielsweise Flüssigkristalle, wie Helicone, erhältlich durch die LCP Technology GmbH, oder Partikel mit opaleszierendem Effekt, bestehend aus monodispersen Kugeln in einer dreidimensionalen, domänenweise dicht gepackten und regelmäßig angeordneten Struktur, wie sie beispielsweise in der WO 2001/88044 beschrieben sind, einsetzbar. Darüber hinaus können auch holografische Glitterpigmente, wie z.B. Geometrie Pigmente von Spectratek, Fluoreszenzpigmente, Phosphoreszenzpigmente, photochrome Pigmente, thermochrome Pigmente und sogenannte "Quantum Dots", erhältlich z.B. von der Firma Quantum Dots Corporation, Verwendung finden.

Ferner können auch sogenannte "Glitter"-Effektpigmente, welche beispielsweise unter der Handelsbezeichnung Metasomes Standard/Glitter in verschiedenen Farben (gelb, rot, grün, blau) von der Firma Floratech erhältlich sind, eingesetzt werden. Die Glitterpartikel können hierbei in Gemischen mit verschiedenen Hilfs- und Farbstoffen (wie beispielsweise den Farbstoffen mit den Colour Index (CI) Nummern 19 140, 77 007, 77 289, 77 491) vorliegen.

Neben Perlglanzpigmenten können im Rahmen der vorliegenden Erfindung auch insbesondere Metalleffektpigmente zum Einsatz kommen.

Das plättchenförmige Metallsubstrat kann dabei insbesondere aus einem reinen Metall und/oder aus einer Metalllegierung bestehen. Das Metallsubstrat kann vorzugsweise aus der Gruppe von Silber, Aluminium, Eisen, Chrom, Nickel, Molybdän, Gold, Kupfer, Zink, Zinn, Edelstahl, Magnesium, Stahl, Bronze, Messing, Titan und deren Legierungen bzw. Mischungen ausgewählt sein. Bevorzugt besteht das Metallsubstrat jedoch aus Aluminium (Aluminiumgehalt vorzugsweise > 99 Gew.-%, bezogen auf das Metallsubstrat), Kupfer (Kupfergehalt vorzugsweise größer 99 Gew.-%, bezogen auf das Metallsubstrat) und Goldbronze (Kupfergehalt beispielsweise 70 bis 95 Gew.-%, Zinkgehalt beispielsweise 5 bis 30 Gew.-%, jeweils bezogen auf das Metallsubstrat). Die in den metallischen Substraten vorhandenen Verunreinigungen sollten in möglichst geringen Mengen vorliegen, vorzugsweise < 1 Gew.-%, bezogen auf das Substrat.

Das plättchenförmige Metallsubstrat kann mit wenigstens einer Nachbeschichtung versehen sein. Diese Nachbeschichtung kann z.B. aus Metalloxiden, -hydroxiden oder -oxidhydraten wie beispielsweise Titandioxid, Aluminiumoxid, Eisenoxid, Ceroxid, Chromoxid und Siliziumoxid oder deren Mischungen bestehen. Vorzugsweise besteht die Nachbeschichtung aus mindestens einer Schicht von Siliziumdioxid.

Derartig stabilisierte Metalleffektpigmente, wie sie in der EP 1 532 213 B1 sowie der EP 1 758 550 A2 beschrieben sind, werden z.B. unter der Marke Visionaire von der Firma Eckart GmbH angeboten.

Eine erweiterte Farbpalette für Metalleffekte bietet darüber hinaus zusätzlich gefärbte Metalleffektpigmente, welche

a) einen Kern aus Aluminium sowie eine durch nasschemische Oxidation erhaltene farbgebende Schicht aus Aluminiumoxid bzw. -hydroxid bzw. -oxidhydrat aufweisen oder

b) einen Kern sowie mindestens eine Metalloxidschicht, welche mindestens ein Farbpigment enthält, aufweisen.

Zusätzlich gefärbte Metalleffektpigmente ermöglichen neben den traditionellen Gold-und Silberfarbtönen auch Rotfarbtöne, wie z.B. Visionaire Bright Red 7 und Visionaire Bright Red 34, Blaufarbtöne, wie z.B. Visionaire Bright Blue, sowie warme Champagnerfarbtöne, wie z.B. Visionaire Bright Champagne. Solche Pigmente sind beispielsweise bekannt aus der DE 195 01 307 A1, DE 195 20 312 A1, DE 103 61 436 A1 sowie DE 10 2006 006 716 A1 und sind kommerziell von der Firma Eckart GmbH erhältlich.

Außerdem können auch Infrarotstrahlung reflektierende Metalleffektpigmente, beispielsweise beschrieben in WO 2007/076967, welche einen Infrarot- Strahlung reflektierenden Kern besitzen, eingesetzt werden. Der IR-Strahlung reflektierende Kern ist mit einer für Infrarotstrahlen durchlässigen und umhüllenden Beschichtung versehen. Das Infrarot-Strahlung reflektierende Pigment ist im Wesentlichen weiß.

Daneben können magnetische Metalleffektpigmente, wie beispielsweise plättchenförmige Eisenpigmente, die mit einer passivierenden Inhibitor- bzw. Korrosionsschutzschicht stabilisiert sein können, eingesetzt werden. Derartige Pigmente werden beispielsweise in der EP 1 251 152 B1 beschrieben.

Die Pigmente können beispielsweise aus der entsprechenden Positivliste der Kosmetikverordnung (Verordnung (EG) Nr. 1223/2009, Anhang IV) ausgewählt werden.

In einer weiteren Ausführungsform können die beschriebenen Pigmente mit wenigstens einer organischen Nachbeschichtung, die in einer dem Fachmann bekannten Weise aufgebracht wird, belegt sein.

Bevorzugte Verfahren zur Nachbeschichtung umfassen beispielsweise:

- PEG-Siliconbeschichtung, wie beispielsweise die "AQ"-Modifizierung, erhältlich von LCW,
- Chitosanbeschichtung, wie beispielsweise die "CTS"-Modifizierung, erhältlich von LCW,
- Triethoxycaprylylsilanbeschichtung, wie beispielsweise die "AS"-Modifizierung, erhältlich von LCW,
- Methiconbeschichtung, wie beispielsweise die "SI"-Modifizierung, erhältlich von LCW,
- Dimethiconbeschichtung, wie beispielsweise die "Covasil 3.05"-Modifizierung, erhältlich von LCW,
- Dimethicone/Trimethylsiloxysilicatbeschichtung, wie beispielsweise die "Covasil 4.05"-Modifizierung, erhältlich von LCW,
- Lauryllysinbeschichtung, wie beispielsweise die "LL"-Modifizierung, erhältlich von LCW,
- Lauryllysinmethiconbeschichtung, wie beispielsweise die "LUSI"-Modifizierung, erhältlich von LCW,
- Magnesiummyristatbehandlung, wie beispielsweise die "MM"-Modifizierung, erhältlich von LCW,
- Aluminumdimyristatbeschichtung, wie beispielsweise die "MI"-Modifizierung, erhältlich von Miyoshi,
- Perfluorpolymethylisopropyletherbeschichtung, wie beispielsweise die "FHC"-Modifizierung, erhältlich von LCW,
- Dinatriumstearylglutamatbeschichtung, wie beispielsweise die "NAI"-Modifizierung, erhältlich von Miyoshi,
- Perfluoralkylphosphatbehandlung, wie beispielsweise die "PF"-Modifizierung, erhältlich von Daito,
- Acrylat/Dimethicon- und Perfluoroalkylphosphatbeschichtung, wie beispielsweise die "FSA"-Modifizierung, erhältlich von Daito,
- Polymethylhydrogensiloxan/Perfluoroalkylphosphatbeschichtung, wie beispielsweise die "FS01 "-Modifizierung, erhältlich von Daito,
- Lauryllysin/Aluminumtristearatbeschichtung, wie beispielsweise die "LL-StAl"-Modifizierung, erhältlich von Daito,
- Octyltriethylsilanbeschichtung, wie beispielsweise die "OTS"-Modifizierung, erhältlich von Daito,

- Octyltriethylsilan/Perfluoralkylphosphatbeschichtung, wie beispielsweise die "FOTS"-Modifizierung, erhältlich von Daito,
- Acrylatdimethiconcopolymerbeschichtung, wie beispielsweise die "ASC"-Modifizierung, erhältlich von Daito,
- Isopropyltitantriisostearatbeschichtung, wie beispielsweise die "ITT"-Modifizierung, erhältlich von Daito,
- Mikrokristalline Cellulose- und Carboxymethylcellulosebeschichtung, wie beispielsweise die "AC"-Modifizierung, erhältlich von Daito,
- Acrylatcopolymerbeschichtung, wie beispielsweise die "APD"-Modifizierung, erhältlich von Daito, sowie
- Perfluoralkylphosphat/Isopropyltitantriisostearatbeschichtung, wie beispielsweise die "PF+ITT"-Modifizierung, erhältlich von Daito.

Die Pigmente können sowohl einzeln als auch im Gemisch vorliegen und darüber hinaus gegenseitig miteinander beschichtet sein.

Zur Erzielung spezieller Farbeffekte können im Rahmen der vorliegenden Erfindung neben den beschriebenen Pigmenten weitere Pigmente und/oder Effektpigmente bzw. deren Mischungen in variablen Mengenverhältnissen eingesetzt werden.

**Silikonöle**

Beispiele von Silikonölen umfassen die der folgenden Strukturen:

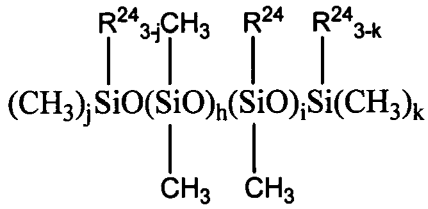

(III)

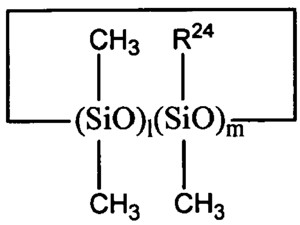

(IV)

$R^{25}_{4-z}Si(OSi(CH_3)_3)_z)$

wobei $R^{24}$ gewählt ist aus der Gruppe bestehend aus Wasserstoff, einer Hydroxylgruppe, Alkyl- oder fluorierten Alkylgruppen mit 2 bis 20 Kohlenstoffatomen, Arylgruppen, Aminoalkylgruppen, $C_{6-22}$-Alkoxygruppen und einer Gruppe der Formel $(CH_3)_3SiO[(CH_3)_2SiO]_ySi(CH_3)_2CH_2CH_2$-, worin y eine ganze Zahl von 0 bis 500 ist. $R^{25}$ ist eine $C_{1-20}$-Alkylgruppe. In Formel (III) ist h eine ganze Zahl von 0 bis 1000, i eine ganze Zahl von 0 bis 1000, unter der Voraussetzung, dass h + i = 1 bis 2000 beträgt und jedes j und k unabhängig voneinander 0, 1, 2 oder 3 beträgt. In Formel (IV) stehen l und m für ganze Zahlen von 0 bis 8, wobei l + m von 3 bis 8 reicht, und in Formel (V) steht z für eine ganze Zahl von 1 bis 4. Beispiele für den Rest $R^{24}$ umfassen Methyl, Ethyl, Propyl, Butyl, Hexyl, Octyl, Decyl, Dodecyl, Tetradecyl, Hexadecyl, Octadecyl, Trifluoropropyl, Nonafluorohexyl, Heptadecylfluorodecyl, Phenyl, Aminopropyl, Dimethylaminopropyl, Aminoethylaminopropyl, Stearoxy, Butoxy, Ethoxy, Propoxy, Cetyloxy, Myristyloxy, Styryl und alpha-Methylstylyl, worunter Hexyl, Octyl, Decyl, Dodecyl, Tetradecyl, Hexadecyl, Octadecyl, Trifluoropropyl, Phenyl, Aminopropyl und

Aminoethylaminopropyl bevorzugt sind. Beispiele des Silikonöls umfassen Organopolysiloxane mit niedriger oder hoher Viskosität, wie beispielsweise Dimethylpolysiloxan, Methylphenylpolysiloxan, Methylhydrogenpolysiloxan und Dimethylsiloxanmethylphenylsiloxan-Copolymer; Cyclosiloxane, wie Octamethylcyclotetrasiloxan (D4), Decamethylcyclopentasiloxan (D5), Dodecamethylcyclohexasiloxan (D6), Tetramethyltetrahydrogencyclotetrasiloxan (H4) und Tetramethyltetraphenylcyclotetrasiloxan; Tristrimethylsiloxysilan (M3T), Tetrakistrimethylsiloxysilan (M4Q); verzweigte Siloxane, wie beispielsweise Tristrimethylsiloxypropylsilan, Tristrimethylsiloxybutylsilan, Tristrimethylsiloxyhexylsilan und Tristrimethylsiloxyphenylsilan; höhere alkoholmodifizierte Silikone, wie Steroxysilikon; alkylmodifizierte Silikone, aminomodifizierte Silikone und fluoromodifizierte Silikone.

Anwendungen

Die Pigment- und/oder Füllstoffdispersionen in Silikonöl entsprechend der vorliegenden Erfindung können in einem weiten Bereich von Formulierungen einschließlich Harzen, Ölen, Fetten, Gleitmitteln, Gummimaterialien, Dichtmitteln, Klebstoffen, Wachsen oder Beschichtungsmittelzusammensetzungen eingesetzt werden. Die Dispersionen können auch in Formulierungen, die in der Körperpflegeindustrie hergestellt werden, eingesetzt werden oder in elektrischen Anwendungen in der Elektronikindustrie, in der Schiffsindustrie, für medizinische Anwendungen, in der Bauindustrie oder in der Automobilindustrie. Beispiele schließen kosmetische Präparate, elektronisches Papier, wie zum Beispiel das Display bei Ebooks, die Verkapselung mikroelektronischer Chips, Unterwasserbootshautbeschichtungen, wie beispielsweise Anti-Fouling-Beschichtungen, Silikonröhren oder Gleitadditive für Bremskomponenten ein.

Die Copolymere können in relativ breiten Mengen von 0,01 bis 90 Gew.-%, bevorzugt 1 bis 50 Gew.-%, ganz besonders bevorzugt 2 bis 40 Gew.-%, jeweils bezogen auf die gesamte Zusammensetzung der homogenen Dispersion, in den homogenen Dispersionen eingesetzt werden. Bei den homogenen Dispersionen handelt es sich vorzugweise um Pigment- und Füllstoffpräparationen.

Weiterer Gegenstand der vorliegenden Erfindung sind Lacke, Pasten und Formmassen enthaltend die erfindungsgemäßen Copolymere und ein oder mehrere Pigmente, organische Lösemittel und/oder Wasser, sowie gegebenenfalls Bindemittel und lackübliche Hilfsstoffe.

Weiterer Gegenstand der Erfindung sind Beschichtungsmittel, Kunststoffe oder homogene Dispersionen enthaltend mindestens ein erfindungsgemäßes Copolymer. Dabei beträgt der Copolymeranteil vorzugsweise 0,01 bis 5 Gew.-%, bevorzugt 0,02 bis 2 Gew.-% und besonders bevorzugt 0,03 bis 1 Gew.-%, jeweils bezogen auf die gesamte Zusammensetzung des Beschichtungsmittels oder des Kunststoffes, in Beschichtungsmitteln oder Kunststoffen oder in homogenen Dispersionen, wie Pigment- und Füllstoffpräparationen, vorzugsweise 0,01 bis 90 Gew.-%, bevorzugt 1 bis 50 Gew.-%, ganz besonders bevorzugt 2 bis 40 Gew.-%, jeweils bezogen auf die gesamte Zusammensetzung der homogenen Dispersion.

**Beispiele**

**Abkürzungen, Handelsnamen:**

IPDI = Isophorondiisocyanat
TDI = Toluol-2,4-diisocyanat
DBTL = Dibutylzinndilaurat
PMI = Polymolekularitätsindex
Grilonit RV 1812 = 1,6-Hexandiglycidylether von EMS-CHEMIE AG
D.E.R. 332 Epoxy Resin = Bisphenol A Diglycidylether von The Dow Chemical Company

**Meßverfahren:**

Gelpermeationschromatographie (GPC)

Die Gelpermeationschromatographie wurde bei 40°C mit einer Hochdruckflüssigkeitschromatographie-Pumpe (Bischoff HPLC 2200) und einem Brechungsindexdetektor (Waters 419) durchgeführt. Als Elutionsmittel wurde Tetrahydrofuran mit einer Elutionsgeschwindigkeit von 1 mL/min verwendet. Die Kalibrierung wurde mittels Polystyrol-Standards durchgeführt. Das zahlenmittlere Molekulargewicht Mn, das gewichtsmittlere Molekulargewicht Mw und der Polymolekularitätsindex PMI = Mw/Mn wurden mit dem Programm NTeqGPC berechnet.

NMR-Spektroskopie:

NMR-Messungen wurden mit einem NMR-Gerät (Bruker DPX 300) bei 300 MHz ($^{1}H$) bzw. 75 MHz ($^{13}C$) durchgeführt. Als Lösemittel wurden deuteriertes Chloroform und deuteriertes Dimethylsulfoxid verwendet.

NCO-Gehaltsbestimmung

Der NCO-Gehalt wird durch Umsetzung der NCO-Gruppen der Isocyanate mit einem Dibutylaminüberschuß zu Harnstoffderivaten und anschließender Rücktitration des überschüssigen Amins mit HCl quantitativ bestimmt. Der NCO-Gehalt gibt den Gehalt an Isocyanat in Gew.-% an.

Hydroxyzahl

Alkoholische Hydroxygruppen werden durch Acetylierung mit einem Überschuss Essigsäureanhydrid umgesetzt. Anschließend wird das überschüssige Essigsäureanhydrid durch Wasserzugabe zur Essigsäure aufgespalten und mit ethanolischer KOH zurücktritiert. Die Hydroxyzahl ist die Menge KOH in mg, die der bei der Acetylierung von 1 g Substanz gebundenen Menge Essigsäure äquivalent ist.

Aminzahl

Aminhaltige Substanzen werden mit HCl titriert. Unter der Aminzahl wird die Menge KOH in mg verstanden, die dem Aminanteil von 1g Substanz entspricht.

**Synthesebeispiele**

Die Erfindung wird durch die unten stehenden Beispiele illustriert. Sofern nicht anders angegeben, sind Teile und Prozentangaben als Gewichtsteile bzw. Gewichtsprozentangaben zu verstehen. Beim Einsatz molekular uneinheitlicher Substanzen sind die angegebenen Molekulargewichte zahlenmittlere Molekulargewichte.

Mono-SiH-funktionelle Polysiloxane werden entsprechend der in der Literatur (T. Suzuki, Polymer, 30 (1989) 333) beschriebenen Verfahren hergestellt.

Beispiel 1:

Synthese von monoaminofunktionellem Polysiloxan (B)

In einem mit Rührer, Thermometer, Tropftrichter, Rückflusskühler und Stickstoffeinleitungsrohr versehenen Vierhalskolben werden mono-SiH-funktionelles Polysiloxan (250 g, Mn ≈ 2000 g/mol) und Karstedt Katalysator (4,38 g, 0,2%ige Anlösung in Xylol) vorgelegt, gut durchmischt und auf 100 °C erhitzt. Allylamin (9,29 g) wird während 30 Minuten zugetropft. Die Umsetzung des mono-SiH-funktionellen Polysiloxans wird mittels gasvolumetrischer Bestimmung verfolgt. Nach vollständiger Umsetzung wird das überschüssige Allylamin abdestilliert. Die gemessene Aminzahl des Produktes beträgt 24,1 mg KOH/g.

Beispiel 2:

Synthese von monoaminofunktionellem Polysiloxan (B)

In einem mit Rührer, Thermometer, Tropftrichter, Rückflusskühler und Stickstoffeinleitungsrohr versehenen Vierhalskolben werden mono-SiH-funktionelles Polysiloxan (1500 g, Mn ≈ 4500 g/mol) und Karstedt Katalysator (6,56 g, 0,8%ige Anlösung in Xylol) vorgelegt, gut durchmischt und auf 100 °C erhitzt. Allylamin (39,8 g) wird während 30 Minuten zugetropft. Die Umsetzung des mono-SiH-funktionellen Polysiloxans wird mittels gasvolumetrischer Bestimmung verfolgt. Nach vollständiger Umsetzung wird das überschüssige Allylamin abdestilliert. Die gemessene Aminzahl des Produktes beträgt 10,1 mg KOH/g.

Beispiel 3:

Synthese von monohydroxyfunktionellem Polysiloxan

In einem mit Rührer, Thermometer, Tropftrichter, Rückflusskühler und Stickstoffeinleitungsrohr versehenen

Vierhalskolben werden mono-SiH-funktionelles Polysiloxan (300 g, Mn ≈ 2000 g/mol) und Karstedt Katalysator (0,75 g, 0,2%ige Anlösung in Xylol) vorgelegt und auf 55 °C erhitzt. Die Zudosierung von Allylglycol (19,9 g) erfolgt in der Art, dass die Temperatur 75 °C nicht überschreitet. Die Umsetzung des mono-SiH-funktionellen Polysiloxans wird mittels gasvolumetrischer Bestimmung verfolgt. Nach vollständiger Umsetzung wird das überschüssige Allylglycol abdestilliert. Die gemessene Hydroxyzahl des Produktes beträgt 25,2 mg KOH/g.

Beispiel 4:

Synthese von monoisocyanatfunktionellem Polysiloxan (C)

In einem mit Rührer, Thermometer, Tropftrichter, Rückflusskühler und Stickstoffeinleitungsrohr versehenen Vierhalskolben wird IPDI (114,8 g), Xylol (20,8 g) DBTL (0,83 g in 7,5 g Xylol) und Benzoylchlorid (0,2 g) vorgelegt. Das hydroxyfunktionelle Polysiloxan aus Beispiel 3 (300 g) wird bei Raumtemperatur zugetropft, so dass die Temperatur 30 °C nicht übersteigt. Der Reaktionsumsatz wird durch titrimetrische Bestimmung des Isocyanatgehaltes bestimmt. Nach vollständigem Umsatz des hydroxyfunktionellen Polysiloxans wird das restliche IPDI am Dünnschichtverdampfer abdestilliert. Der gemessene NCO-Gehalt des Produktes beträgt 1,63 Gew.-%.

Beispiel 5:

Synthese eines monoisocyanatofunktionellen Polyethers

In einem mit Rührer, Thermometer, Tropftrichter, Rückflusskühler und Stickstoffeinleitungsrohr versehenen Vierhalskolben wird TDI (114,4 g) vorgelegt. Methoxypolyethylenglycol 350 (70 g) wird bei 50 °C zugetropft, so dass die Temperatur 55 °C nicht übersteigt. Anschließend wird weitere 3 Stunden bei 55 °C gerührt. Nach vollständigem Umsatz des hydroxyfunktionellen Methoxypolyethylenglycols wird das restliche TDI am Dünnschichtverdampfer abdestilliert. Der gemessene NCO-Gehalt des Produktes beträgt 8 Gew.-%.

Beispiel 6:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 1 (376,3 g) und Grilonit RV 1812 (22,8 g) vorgelegt und unter Stickstoff auf 140 °C erhitzt. Der Epoxidumsatz wird mittels $^1$H-NMR verfolgt. Nach quantitativem Umsatz der Epoxidgruppe wird die Reaktion abgebrochen. Mittels GPC werden $M_n$ = 5500 g/mol und PMI = 2,0 ermittelt.

Beispiel 7:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 1 (48,4 g) und Grilonit RV 1812 (32,8 g) vorgelegt und unter Stickstoff auf 140 °C erhitzt. Nach 2 Stunden Reaktionszeit wird langsam unter Rühren Hexylamin zugetropft. Der Epoxidumsatz wird mittels $^1$H-NMR verfolgt. Nach quantitativem Umsatz der Epoxidgruppe wird die Reaktion abgebrochen. Mittels GPC werden $M_n$ = 3100 g/mol und PMI = 3,2 ermittelt.

Beispiel 8:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 1 (25,1 g) und Grilonit RV 1812 (34,0 g) vorgelegt und unter Stickstoff auf 140 °C erhitzt. Nach 2 Stunden Reaktionszeit wird langsam unter Rühren Oleylamin zugetropft. Der Epoxidumsatz wird mittels $^1$H-NMR verfolgt. Nach quantitativem Umsatz der Epoxidgruppe wird die Reaktion abgebrochen. Mittels GPC werden $M_n$ = 2700 g/mol und PMI = 2,3 ermittelt.

Beispiel 9:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 2 (53,5 g), Grilonit RV 1812 (27,6 g) und Xylol (26,3 g) vorgelegt und unter Stickstoff auf 140 °C erhitzt. Nach 2 Stunden Reaktionszeit wird langsam unter Rühren Ethanolamin (6,5 g) zugetropft. Der Epoxidumsatz wird mittels $^1$H-NMR verfolgt. Nach quantitativem Umsatz der Epoxidgruppe wird die Reaktion abgebrochen.

Beispiel 10:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 2 (48,4 g), Grilonit RV 1812 (12,5 g) und Xylol (14,5 g) vorgelegt und unter Stickstoff auf 140 °C erhitzt. Nach 2 Stunden Reaktionszeit wird langsam unter Rühren Oleylamin (11,6 g gelöst in 7,3 g Xylol) zugetropft. Der Epoxidumsatz wird mittels $^1$H-NMR verfolgt. Nach quantitativem Umsatz der Epoxidgruppe wird die Reaktion abgebrochen. Die gemessene Hydroxyzahl des Produktes beträgt 58,3 mg KOH/g. Mittels GPC werden $M_n$ = 3000 g/mol und PMI = 5,7 ermittelt.

Beispiel 11:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 2 (55,0 g), Grilonit RV 1812 (14,2 g) und Xylol (14,8 g) vorgelegt und unter Stickstoff auf 140 °C erhitzt. Nach 3 Stunden Reaktionszeit wird langsam unter Rühren Hexylamin (5,0 g gelöst in 7,4 g Xylol) zugetropft. Der Epoxidumsatz wird mittels $^1$H-NMR verfolgt. Nach quantitativem Umsatz der Epoxidgruppe wird die Reaktion abgebrochen. Mittels GPC werden $M_n$ = 2600 g/mol und PMI = 7,6 ermittelt.

Beispiel 12:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden Oleylamin (17,0 g) und Grilonit RV 1812 (14,9 g) vorgelegt und unter Stickstoff auf 140 °C erhitzt. Nach 3 Stunden Reaktionszeit wird DBTL (10 mg) zugegeben und langsam unter Rühren monoisocyanatfunktionelles Polysiloxan aus Beispiel 4 (11,8 g) zudosiert. Mittels GPC werden $M_n$ = 3800 g/mol und PMI = 2,1 ermittelt.

Beispiel 13:

Synthese eines modifizierten, Polysiloxan-Gruppen enthaltenden Copolymers

In einem mit Rührer, Thermometer, Tropftrichter, Rückflusskühler und Stickstoffeinleitungsrohr versehenen Vierhalskolben werden das Polysiloxan Copolymeren aus Beispiel 8 (60 g), der monoisocyanatofunktionelle Polyether aus Beispiel 5 (6,83 g) und DBTL (0,06 g) vorgelegt und unter Stickstoff auf 120 °C erhitzt. Nach 5 Stunden Reaktionszeit wird die Reaktion abgebrochen. Die gemessene Hydroxyzahl des Produktes beträgt 45,5 mg KOH/g. Mittels GPC werden $M_n$ = 3800 g/mol und PMI = 5,6 ermittelt.

Beispiel 14:

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 1 (60 g) und D.E.R. 332 Epoxy Resin (7,2 g) vorgelegt und unter Stickstoff auf 140 °C erhitzt. Der Epoxidumsatz wird mittels $^1$H-NMR verfolgt. Nach quantitativem Umsatz der Epoxidgruppe wird die Reaktion abgebrochen. Mittels GPC werden $M_n$ = 15800 g/mol und PMI = 5,4 ermittelt.

## Anwendungsbeispiele

### a) Prüfung auf schmutzabweisende Oberflächen

Die Additive wurden in 2 verschiedenen Systemen getestet und hinsichtlich ihrer schmutz- und ölabweisenden Wirkung nach folgenden Kriterien beurteilt:

Visuelle Beurteilung der Lackoberfläche:

Die Lackoberfläche wurde visuell auf Trübung im Film, Verlauf und Oberflächenstörungen, wie Schaum, Krater, Stippen und Unverträglichkeiten, untersucht.

Bewertung: 1 - 5

1 = Lackoberfläche ohne Trübung, bzw. ohne Oberflächenstörungen
5 = Trübe Lackoberfläche, bzw. Lackoberfläche mit vielen Oberflächenstörungen

Edding-Test:

Es wurde mit einem Permanent-Marker des Typs "Edding 400" die Lackoberfläche beschriftet und visuell beurteilt, ob die Oberfläche beschreibbar war. Es wurde beurteilt, ob die Tinte auf der Oberfläche spreitet oder sich zusammenzieht. Nach dem Trocknen der Tinte wurde versucht, diese mit einem trockenen Tuch abzuwischen war.

Bewertung: 1 - 5

1 = Tinte zieht sich zusammen, lässt sich restlos mit einem Papiertuch entfernen
5 = Tinte spreitet sehr gut auf Untergrund, lässt sich praktisch nicht entfernen

Mineralöl-Ablauftest:

Es wurde ein Tropfen handelsübliches Mineralöl auf die Lackoberfläche gegeben. Anschließend wurde die beschichtete Lackoberfläche gekippt, bis der Tropfen etwa 10 cm gelaufen war. Nach Ablauf von 1 Minute wurde die Ölspur bzw. eine erneute Tropfenbildung visuell bewertet.

Bewertung: 1 - 5

1 = Die Ölspur bildet sich sofort in einzelne Tropfen zurück
5 = Die Ölspur bildet sich nicht zurück, sondern spreitet eventuell weiter

Verschmutzung mit Bayferrox-Pulver:

Auf die Lackoberfläche wurden 3 Teelöffel (~15 g) Bayferrox 130M, Eisenoxid-Pigment, Bayer AG, gestreut und mit dest. Wasser in 5 Spritzgängen mit Hilfe einer Spritzflasche wieder abgespült. Die möglichst rückstandsfreie Oberfläche wurde visuell beurteilt.

Bewertung: 1 - 5:

1 = Bayferrox-Pulver lässt sich rückstandslos mit Wasser abwaschen
5 = kein Reinigungseffekt beim Abspülen mit Wasser, ein großer roter Fleck verbleibt

1) Prüfsystem: 2K-PUR-Decklack

Zusammensetzung (Angaben in Gewichtsteilen)

Komponente A

| | |
|---|---|
| Desmophen NH1520 (Aminofunktionelles Bindemittel, Bayer MaterialScience AG) | 32,1 |
| Desmophen NH1420 (Aminofunktionelles Bindemittel, Bayer MaterialScience AG) | 48,5 |
| Butylacetat | 13,4 |
| MPA | 2,5 |
| DBTL-Lösung (1 % in Butylacetat) | 3,4 |
| Additiv | 0,5 |

Komponente B

| | |
|---|---|
| Desmodur N3600 (Aliphatisches Polyisocyanat, Bayer MaterialScience AG) | 57,3 |

Die Additive aus Beispiel 7, 8, 13 und BYK Silclean 3700 (Einwaage bezogen auf den Festkörperanteil) werden zunächst von Hand in Komponente A eingerührt und anschließend 10 Minuten mit einem Scandex-Rüttler gemischt. Einen Tag nach dem Rütteln werden die additivierten Lacke zusammen mit Komponente B mit einer 100 μm-Kastenrakel auf eine Glasplatte aufgezogen. Von jedem additivierten Lack werden jeweils zwei Glasplatten gefertigt.

Die erhaltenen Ergebnisse sind in der folgenden Tabelle dargestellt.

| | Schaum | Trübung | Verlauf | Krater | Edding | Öl | Bayferrox |
|---|---|---|---|---|---|---|---|
| Ohne Additiv | 1 | 1 | 2 | 1 | 5 | 3 | 3 |
| BYK Silclean 3700* | 4 | 1 | 4 | 1 | 2 | 1 | 1 |
| Beispiel 13 | 1 | 2 | 2 | 2 | 3 | 2 | 3 |
| Beispiel 7 | 1 | 2 | 2 | 1 | 2 | 1 | 1,5 |
| Beispiel 8 | 1 | 1 | 2 | 1 | 2 | 1 | 2 |
| * BYK Silclean 3700 ist ein Oberflächenadditiv zur Verbesserung der Reinigungsfähigkeit der BYK-Chemie GmbH mit einem Festkörperanteil von 25 Gew.-% in MPA | | | | | | | |

Die Verwendung der Polymere aus Beispiel 7, 8, 13 zeigen keinen oder keinen wesentlichen negativen Einfluss auf Schaumbildung, Trübung, Verlauf und Krater im festen Film im Vergleich zum System ohne Additiv. BYK Silclean 3700 hingegen führt zu Verlaufsstörungen und zur Ausbildung von Luftbläschen im festen Film. Die erfindungsgemäßen Beispiele 7, 8 und 13 zeigen zusätzlich zu den guten Ergebnissen für Schaumbildung, Trübung, Verlauf und Krater eine ähnlich gute Verbesserung der schmutz- und ölabweisenden Eigenschaften wie das kommerzielle Produkt. Vor allem im Edding-Test zeigen die erfindungsgemäßen Beispiele 7, 8 und 13 verbesserte Werte gegenüber dem System ohne Additiv. Somit gelingt den erfindungsgemäßen Beispielen eine sehr vorteilhafte Balance zwischen den verschiedenen Eigenschaften, wobei vor allem die Balance zwischen einem guten Verlauf, einer geringen Ausbildung von Luftbläschen und zusätzlichem guten schmutz- und ölabweisendem Effekt hervorzuheben ist.

2) Prüfsystem: Acrylat-Melamin-Einbrennlack, klar

| Zusammensetzung (Angaben in Gewichtsteilen) | |
|---|---|
| Setalux 1756 VV-65 (Acrylat-Einbrennharz, Nuplex Resins) | 60 |
| Setamine US 138 BB-70 (Amino-Einbrennharz, Nuplex Resins) | 24 |
| Shellsol A | 8 |
| Xylol | 8 |
| Additiv | 0,05 |

Die Additive aus Beispiel 9, 10, 11 und BYK Silclean 3700 (Einwaage bezogen auf den Festkörperanteil) werden zunächst von Hand eingerührt und anschließend 10 Minuten mit einem Scandex-Rüttler gemischt. Einen Tag nach dem Rütteln werden die additivierten Lacke mit einem 100 μm Kastenrakel auf eine Glasplatte aufgezogen. Nach einer Ablüftzeit von 10 Minuten werden die Glasplatten 25 Minuten bei 140°C eingebrannt. Von jedem additivierten Lack werden jeweils zwei Glasplatten gefertigt.

Die erhaltenen Ergebnisse sind in der folgenden Tabelle dargestellt.

| | Trübung | Verlauf | Krater | Edding | Öl |
|---|---|---|---|---|---|
| Ohne Additiv | 1 | 1 | 1 | 4 | 3 |
| BYK Silclean 3700* | 1 | 1 | 2 | 2 | 2 |
| Beispiel 9 | 2 | 1 | 2 | 1 | 2 |
| Beispiel 10 | 1,5 | 1 | 1 | 2 | 1 |
| Beispiel 11 | 1 | 1 | 1 | 2 | 2 |
| * BYK Silclean 3700 ist ein Oberflächenadditiv zur Verbesserung der Reinigungsfähigkeit der BYK-Chemie GmbH mit einem Festkörperanteil von 25 Gew.-% in MPA | | | | | |

Die Ergebnisse zeigen, dass durch die Verwendung der Copolymere aus Beispiel 9, 10, 11 als Additive ähnlich gute bis bessere schmutz- und ölabweisende Oberflächen erzielt werden wie mit kommerziellen Produkten.

**<u>b) Dispergierung von Pigmenten</u>**

**Beispiele zur Herstellung von Pigmentpräparationen**

Gemäß Tabelle 1 wurden für jeweils eine Ansatzgröße von 100 g nach Vorlage der ersten Position die weiteren Positionen einzeln unter Rühren in ein 250 mL Schraubdeckelglas eingewogen.

Nach Zugabe der gleichen Menge an 1 mm Glasperlen wurde mittels Rüttler (LAU Disperser) 2 Stunden bei Kühlungsstufe 2 dispergiert.

Nach dem Dispergiervorgang erfolgte die Abtrennung der Glasperlen über ein 240 μm-Sieb (Faltsieb F4000).

Als Vergleichsbeispiele zum Stand der Technik wurden Pigmentpräparationen ohne und mit einem handelsüblichen Dispergieradditiv auf Basis eines Silikonacrylates sowie mit einem Handelsprodukt auf Basis eines polyethermodifizierten Polysiloxanes hergestellt.

In Tabelle 2 sind die Viskositäten der Pigmentpräparationen aufgeführt.

**Tabelle 1.1:**

| | **Beispiel** | | |
|---|---|---|---|
| | **1** [Gew.-%] | **2** [Gew.-%] | **3** [Gew.-%] |
| Baysilone Öl PN 200 | 25,00 | 22,75 | 22,75 |
| Dowanol PM | 25,00 | 22,75 | 22,75 |
| Copolymer nach Beispiel 6 | | 4,50 | |
| Dow Corning 5562 | | | 4,50 |
| Bayferroxrot 130M | 50,00 | 50,00 | 50,00 |
| | 100,00 | 100,00 | 100,00 |

Der Festkörperanteil des erfindungsgemäßen Copolymers bzw. der Vergleichsverbindung beträgt 9 Gew.-% bezogen auf das Pigment.

**Tabelle 1.2:**

| | Beispiel | | |
|---|---|---|---|
| | 4 [Gew.-%] | 5 [Gew.-%] | 6 [Gew.-%] |
| Baysilone Öl PN 200 | 25,00 | 23,75 | 23,75 |
| Dowanol PM | 25,00 | 23,75 | 23,75 |
| Copolymer nach Beispiel 6 | | 2,50 | |
| Dow Corning 5562 | | | 2,50 |
| Kronos 2160 | 50,00 | 50,00 | 50,00 |
| | 100,00 | 100,00 | 100,00 |

Der Festkörperanteil des erfindungsgemäßen Copolymers bzw. der Vergleichsverbindung beträgt 5 Gew.-% bezogen auf das Pigment.

**Tabelle 1.3:**

| | Beispiel | | | |
|---|---|---|---|---|
| | 7 [Gew.-%] | 8 [Gew.-%] | 9 [Gew.-%] | 10 [Gew.-%] |
| Silikonöl D5 | 70,00 | 65,50 | 55,00 | 65,50 |
| Copolymer nach Beispiel 6 | | 4,50 | | |
| ShinEtsu KP-575 (30% in Silikonöl D5) | | | 15,00 | |
| Dow Corning 5562 | | | | 4,50 |
| Irgalite Rubin 4BV | 30,00 | 30,00 | 30,00 | 30,00 |
| | 100,00 | 100,00 | 100,00 | 100,00 |

Der Festkörperanteil des erfindungsgemäßen Copolymers bzw. der Vergleichsverbindung beträgt 15 Gew.-% bezogen auf das Pigment.

**Tabelle 1.4:**

| | Beispiel | | | |
|---|---|---|---|---|
| | 11 [Gew.-%] | 12 [Gew.-%] | 13 [Gew.-%] | 14 [Gew.-%] |
| Silikonöl D5 | 60,00 | 54,00 | 40,00 | 54,00 |
| Copolymer nach Beispiel 6 | | 6,00 | | |
| ShinEtsu KP-575 (30% in Silikonöl D5) | | | 20,00 | |
| Dow Corning 5562 | | | | 6,00 |
| PV Fast Blue BG | 40,00 | 40,00 | 40,00 | 40,00 |
| | 100,00 | 100,00 | 100,00 | 100,00 |

Der Festkörperanteil des erfindungsgemäßen Copolymers bzw. der Vergleichsverbindung beträgt 15 Gew.-% bezogen auf das Pigment.

**Tabelle 1.5:**

| | Beispiel | | | |
|---|---|---|---|---|
| | 15 [Gew.-%] | 16 [Gew.-%] | 17 [Gew.-%] | 18 [Gew.-%] |
| Silikonöl D5 | 80,00 | 77,00 | 70,00 | 77,00 |
| Copolymer nach Beispiel 6 | | 3,00 | | |

(fortgesetzt)

| | Beispiel | | | |
|---|---|---|---|---|
| | **15** [Gew.-%] | **16** [Gew.-%] | **17** [Gew.-%] | **18** [Gew.-%] |
| ShinEtsu KP-575 (30% in Silikonöl D5) | | | 10,00 | |
| Dow Corning 5562 | | | | 3,00 |
| Printex 35 | 20,00 | 20,00 | 20,00 | 20,00 |
| | 100,00 | 100,00 | 100,00 | 100,00 |

Der Festkörperanteil des erfindungsgemäßen Copolymers bzw. der Vergleichsverbindung beträgt 15 Gew.-% bezogen auf das Pigment.

**Tabelle 1.6:**

| | Beispiel | | | |
|---|---|---|---|---|
| | **19** [Gew.-%] | **20** [Gew.-%] | **21** [Gew.-%] | **22** [Gew.-%] |
| Silikonöl D5 | 75,00 | 61,25 | 29,17 | 61,25 |
| Copolymer nach Beispiel 6 | | 13,75 | | |
| ShinEtsu KP-575 (30% in Silikonöl D5) | | | 45,83 | |
| Dow Corning 5562 | | | | 13,75 |
| D&C Black No.2 | 25,00 | 25,00 | 25,00 | 25,00 |
| | 100,00 | 100,00 | 100,00 | 100,00 |

Der Festkörperanteil des erfindungsgemäßen Copolymers bzw. der Vergleichsverbindung beträgt 55 Gew.-% bezogen auf das Pigment.

**Tabelle 2.1:**

| Viskositäten (EN ISO 2884-1:2006) der Pigmentpräparationen und der Vergleichsbeispiele [in Pas] in Abhängigkeit von der Scherrate [in 1/s] nach Herstellung und Lagerung. | | | | | | | |
|---|---|---|---|---|---|---|---|
| | | Pigmentpräparationen nach Beispiel | | | | | |
| | Scherrate [1/s] | 1 | 2 | 3 | 4 | 5 | 6 |
| Viskosität nach 1 Woche Lagerung bei 50°C | 0,1 | 70 | 16 | 44 | 195 | 109 | 118 |

Die mit dem erfindungsgemäßen Copolymer hergestellten Pigmentpräparationen nach Tabelle 2.1 (Beispiele 2 und 5) zeigen durchweg die niedrigste Viskosität.

**Tabelle 2.2:**

| | | Pigmentpräparationen nach Beispiel | | | | | | | |
|---|---|---|---|---|---|---|---|---|---|
| | Scherrate [1/s] | 7 | 8 | 9 | 10 | 11 | 12 | 13 | 14 |
| Viskosität 1 Tag nach Herstellung | 1 | 26 | 0,60 | 1,9 | 22 | * | 78 | 91 | * |
| * Herstellung einer Pigmentpräparation nicht möglich | | | | | | | | | |

**Tabelle 2.3:**

| | | Pigmentpräparationen nach Beispiel | | | | | | | |
|---|---|---|---|---|---|---|---|---|---|
| | Scherrate [1/s] | 15 | 16 | 17 | 18 | 19 | 20 | 21 | 22 |
| Viskosität (1 Tag nach Herstellung) | 1 | 62 | 0,04 | 0,08 | 18 | * | 0,13 | 0,31 | * |
| Viskosität (nach 6 Monaten Lagerung bei Raumtemperatur) | 1 | - | - | - | - | - | 0,21 | 7,6 | - |
| * Herstellung einer Pigmentpräparation nicht möglich | | | | | | | | | |

Die Messung der Viskosität der Pigmentpräparationen erfolgte bei 23°C mit dem Rheometer Stresstech von der Fa. Rheologica, mit dem Meßsystem Kegel CP25-1 (Messspalt 0,093 mm), bei angegebenen Scherraten. Vor der Probenaufgabe wurden die Pigmentpräparationen zur Homogenisierung mit dem Spatel durchgerührt. Nach dem Zusammenfahren des Messsystems erfolgte die Messung nach 10 Sekunden Vorscherung bei 10 1/s und einer anschließenden Ruhezeit von 10 Sekunden.

Die mit dem erfindungsgemäßen Copolymer hergestellten Pigmentpräparationen (Beispiele 8, 12, 16 und 20) zeigen durchweg die niedrigste Viskosität.

**Tabelle 3:**

| Formulierung eines Silikonharzsystems zur Beurteilung der Verträglichkeiten von Pigmentpräparationen nach Beispiel 1 bis 6. | | | | |
|---|---|---|---|---|
| **Komponente** | **Produktname** | **Beschreibung** | **Gew. %** | **Lieferant** |
| **A** | Silopren E18 | OH terminiertes Polydimethylsiloxan | 39,3 | Fa. Momentive |
| | Silopren E0.5 | OH terminiertes Polydimethylsiloxan | 31,3 | Fa. Momentive |
| | Xylol | | 2,2 | |
| | Dowanol PM | | 5,6 | |
| **B** | TEOS | Tetraethoxysilan | 19,6 | |
| **C** | DBTL (10%ig in Xylol) | Dibutylzinnlaurat | 2 | |

Die Positionen der Komponente A werden zunächst homogen unter Rühren gemischt. Nach einzelner Zugabe der weiteren Komponenten unter Rühren erfolgt die Zugabe der entsprechenden Pigmentpräparation nach den Beispielen 1 bis 6 wie folgt:

Gewichts-Verhältnis Silikonharzsystem zu Pigmentpräparation

9 Teile Silikonharzsystem : 1 Teil Pigmentpräparation (Pigmentpräparation 1 bis 3)
1 Teile Silikonharzsystem : 1 Teil Pigmentpräparation (Pigmentpräparation 4 bis 6)

Nach homogener Verteilung der Pigmentpräparation und einer Vorreaktionszeit von 20 Minuten wird das Beschichtungssystem auf Kontrastkarton mittels eines 100 µm-Spiralrakels appliziert.

**Tabelle 4.1:**

| Verträglichkeit der Pigmentpräparationen mit dem Silikonharzsystem nach Tabelle 3: | | | |
|---|---|---|---|
| | **Beschichtung mit Pigmentpräparation nach Beispiel** | | |
| | **1** | **2** | **3** |
| **Farbort [a*] *[1] (ISO 7724)** | 35,6 | 38,3 | 35,9 |

(fortgesetzt)

| Verträglichkeit der Pigmentpräparationen mit dem Silikonharzsystem nach Tabelle 3: | | | |
|---|---|---|---|
| | **Beschichtung mit Pigmentpräparation nach Beispiel** | | |
| | **1** | **2** | **3** |
| **Farbort [a*] *2 (ISO 7724)** | 36,0 | 38,1 | 35,9 |
| **Visuelle Beurteilung der Beschichtung *2 (DIN 53230)** | 5 | 2 | 4 |
| *1 Nach 1 Tag Lagerung der Pigmentpräparation<br>*2 Nach 7 Tagen Lagerung der Pigmentpräparation bei 50°C | | | |

**Tabelle 4.2:**

| Verträglichkeit der Pigmentpräparationen mit dem Silikonharzsystem nach Tabelle 3: | | | |
|---|---|---|---|
| | **Beschichtung mit Pigmentpräparation nach Beispiel** | | |
| | **4** | **5** | **6** |
| **Farbort [L*] *1 (ISO 7724)** | 95,8 | 98,0 | 94,9 |
| **Farbort [L*] *2 (ISO 7724)** | 94,9 | 98,0 | 97,5 |
| **Visuelle Beurteilung der Beschichtung *2 (DIN 53230)** | 4 | 2 | 4 |
| **Glanz *2 Winkel 60° (EN ISO 2813:1999)** | 40 | 57 | 28 |
| *1 Nach 1 Tag Lagerung der Pigmentpräparation<br>*2 Nach 7 Tagen Lagerung der Pigmentpräparation bei 50°C | | | |

Zur Beurteilung der Verträglichkeit wurden die Pigmentpräparationen nach entsprechender Lagerung in dem Silikonharzsystem anteilsmäßig wie oben beschrieben eingesetzt und die Beschichtungen insbesondere auf Farbort und Ausschwimmverhalten beurteilt.

1 = kein Ausschwimmen, homogene Verteilung des Pigmentes, keine Flockulate
5 = starkes Ausschwimmen, starke Inhomogenität, viele Flockulate.

Bei der Beschichtung, welche die mit dem erfindungsgemäßen Copolymer hergestellte Pigmentpräparation nach Beispiel 2 enthält, zeigt sich eine homogene Verteilung sowie kaum Ausschwimmen des Pigmentes. Der Farbort liegt hierbei im Vergleich etwas weiter im vorteilhaften rötlichen Bereich.

Die Beschichtung, welche die mit dem erfindungsgemäßen Copolymer hergestellte Pigmentpräparation nach Beispiel 5 enthält, zeigt einen höheren Glanzwert und der Farbort liegt im Vergleich im vorteilhaften helleren Bereich.

Beide erfindungsgemäßen Systeme zeigen eine sehr gute Farbtreue bzw. Farbstabilität, da sowohl nach 1 Tag Lagerung und nach 7 Tagen Lagerung der Farbort gleich bleibt. Vor allem zeigt das Beispiel 5 mit dem erfindungsgemäßen Copolymer nach Beispiel 6 eine verbesserte Farbstabilität im Vergleich zu dem Vergleichsbeispiel 4 ohne Dispergieradditiv und Vergleichsbeispiel 6 mit Dow Corning 5562.

Somit zeigen die mit dem erfindungsgemäßen Copolymer hergestellten Pigmentpräparationen in dem verwendeten Silikonharzsystem gegenüber dem Vergleichsbeispiel eine sehr gute Farbtonentwicklung und Verträglichkeit.

## Patentansprüche

1. Copolymer enthaltend mindestens eine an das Grundgerüst des Copolymers angeknüpfte Polysiloxan-Gruppe, **dadurch gekennzeichnet, dass** dieses Grundgerüst ein Addukt mindestens eines Amins und mindestens eines Epoxids ist, wobei das Copolymer gegebenenfalls auch versalzt oder quaternisiert vorliegt.

2. Copolymer gemäß Anspruch 1, **dadurch gekennzeichnet, dass** das zahlenmittlere Molekulargewicht des Copolymers 500 bis 200000 g/mol, vorzugsweise 500 bis 50000 g/mol, besonders bevorzugt 1000 bis 20000 g/mol ist.

3. Copolymer gemäß einem der Ansprüche 1 oder 2, **dadurch gekennzeichnet, dass** das Copolymer ein aminofunktional terminiertes Copolymer ist.

4. Copolymer gemäß einem der Ansprüche 1 bis 3, **dadurch gekennzeichnet, dass** als das mindestens eine Epoxid ein Epoxid (A) der folgenden allgemeinen Formel (I) ist:

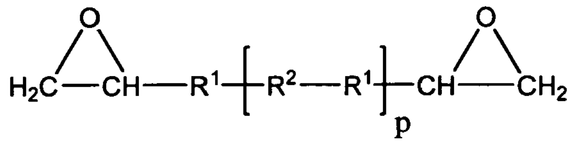

**(I),**

worin alle $R^1$ unabhängig voneinander für $-CH_2-O-$, $-O-CH_2-$ oder $-CH_2-$ stehen, alle $R^2$ unabhängig voneinander für Alkylenreste, Cycloalkylenreste, Arylenreste oder Aralkylenreste stehen und p = 1-8 ist.

5. Copolymer gemäß Anspruch 4, **dadurch gekennzeichnet, dass** das Epoxid (A) ein Diepoxid der allgemeinen Formel (I') ist:

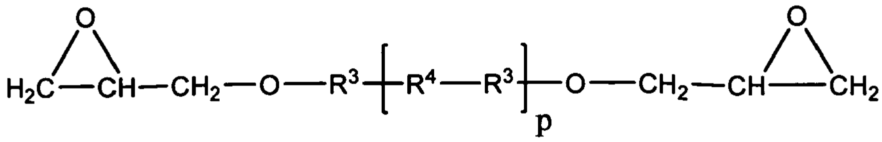

**(I')**

worin alle $R^3$ unabhängig voneinander für Alkylenreste, Cycloalkylenreste, Arylenreste oder Aralkylenreste stehen, alle $R^4$ unabhängig voneinander für O oder Alkylenreste stehen und p = 0-8 ist.

6. Copolymer gemäß einem der Ansprüche 1 bis 5, **dadurch gekennzeichnet, dass** die Polysiloxan-Gruppe über ein monoaminofunktionelles Polysiloxan (B) und/oder über ein monoisocyanatfunktionelles Polysiloxan (C) in das Copolymer eingeführt wurde.

7. Copolymer gemäß Anspruch 6, **dadurch gekennzeichnet, dass** ein monoaminofunktionelles Polysiloxan (B) der folgenden Formel verwendet wird:

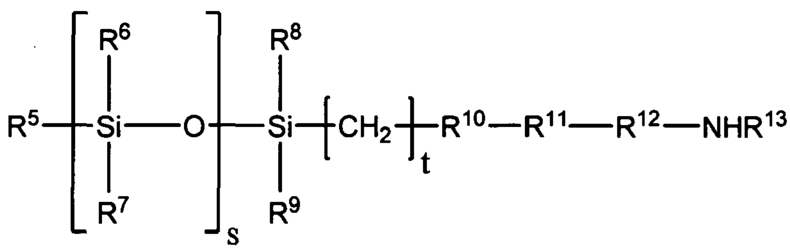

worin $R^5$ für einen halogenierten Alkylrest mit 1 bis 30 Kohlenstoffatomen, einen gesättigten linearen Alkylrest mit 1 bis 30 Kohlenstoffatomen, einen gesättigten verzweigten oder zyklischen Alkylrest mit 3 bis 30 Kohlenstoffatomen oder einen Arylrest, einen Alkylarylrest oder einen Arylalkylrest mit 6 bis 30 Kohlenstoffatomen steht, vorzugsweise für einen Methylrest oder einen Butylrest,
alle $R^6$ und $R^7$ unabhängig voneinander für gesättigte lineare Alkylreste mit 1 bis 6 Kohlenstoffatomen, gesättigte verzweigte oder zyklische Alkylreste mit 3 bis 6 Kohlenstoffatomen, ungesättigte Alkylreste mit 2 bis 6 Kohlenstoffatomen oder Arylreste, Alkylarylreste oder Arylalkylreste mit 6 bis 12 Kohlenstoffatomen stehen, vorzugsweise für Methyl-, Ethyl-, Propyl-, Butyl- oder fluorierte Alkylreste mit 1 bis 30 Kohlenstoffatomen oder Phenyl- oder substituierte Phenylreste, besonders bevorzugt für Methylreste,
alle $R^8$ und $R^9$ unabhängig voneinander für $R^5[SiR^6R^7]_s$ ,wobei $R^5$, $R^6$ und $R^7$ wie oben definiert sind und unabhängig

davon ausgewählt sind, gesättigte lineare Alkylreste mit 1 bis 6 Kohlenstoffatomen, gesättigte verzweigte oder zyklische Alkylreste mit 3 bis 6 Kohlenstoffatomen, Alkenreste mit 2 bis 6 Kohlenstoffatomen oder Arylreste, Alkylarylreste oder Arylalkylreste mit 6 bis 12 Kohlenstoffatomen stehen, vorzugsweise für Methyl-, Ethyl-, Propyl-, Butyl- oder fluorierten Alkylreste oder Phenyl- oder substituierte Phenylreste, besonders bevorzugt für Methylreste,
s = 1 bis 400 und t = 2 bis 30 ist,
$R^{10}$ für $(CH_2)_u$, O, S oder $C_6R^{14}{}_4$ steht, wobei u = 0 oder 1 ist und alle $R^{14}$ unabhängig voneinander für Wasserstoff oder einen Alkylrest mit 1 bis 6 Kohlenstoffatomen stehen,
$R^{11}$ für $(CH_2)_v$ oder $(CH_2CHR^{15}O)_w$ steht, wobei v = 0 bis 30 und w = 0 bis 50 ist und alle $R^{15}$ unabhängig voneinander für Wasserstoff, einen gesättigten linearen Alkylrest mit 1 bis 6 Kohlenstoffatomen, einen gesättigten verzweigten Alkylrest mit 3 bis 6 Kohlenstoffatomen oder einen zyklischen Alkylrest mit 4 bis 6 Kohlenstoffatomen, $R^{12}$ für $(CH_2)_x$ mit x = 0 bis 3 steht und
$R^{13}$ für Wasserstoff, einen gesättigten linearen Alkylrest mit 1 bis 6 Kohlenstoffatomen, einen gesättigten verzweigten Alkylrest mit 3 bis 6 Kohlenstoffatomen oder einen Arylrest, einen Alkylarylrest oder einen Arylalkylrest mit 6 bis 9 Kohlenstoffatomen steht, vorzugsweise für Wasserstoff.

8. Copolymer gemäß Anspruch 7, **dadurch gekennzeichnet, dass** $[CH_2]_tR^{10}R^{11}R^{12}NHR^{13}$ im monoaminofunktionellen Polysiloxan (B) repräsentiert wird durch einen 2-Aminoethylrest, einen 3-Aminopropylrest, einen 3-Aminopropylethyletherrest oder einen 6-Aminohexylrest, vorzugsweise durch einen 3-Aminopropylrest.

9. Copolymer gemäß einem der Anspruch 6 bis 8, **dadurch gekennzeichnet, dass** ein monoisocyanatfunktionelles Polysiloxan (C) der folgenden Formel verwendet wird:

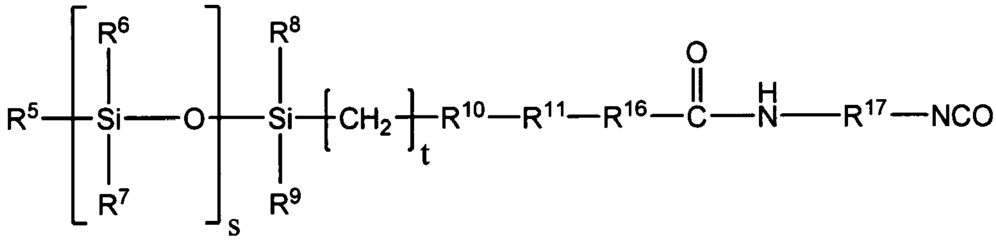

worin $R^5$, $R^6$, $R^7$, $R^8$, $R^9$, $R^{10}$, $R^{11}$, s und t wie für Komponente (B) gemäß Anspruch 7 definiert sind,
$R^{16}$ für O, S oder NH steht, worin $R^{16}$ entfällt, wenn w mindestens 1 ist, und
$R^{17}$ für einen gesättigten linearen Alkylenrest mit 1 bis 30 Kohlenstoffatomen, einen gesättigten verzweigten oder zyklischen Alkylenrest mit 3 bis 30 Kohlenstoffatomen oder einen Arylenrest, einen Alkylarylenrest oder einen Arylalkylenrest mit 6 bis 30 Kohlenstoffatomen steht, vorzugsweise für den Rest eines Diisocyanats ohne die NCO-Gruppen, ganz besonders bevorzugt für den Rest von 2,4-Toluoldiisocyanat, 2,6-Toluoldiisocyanat oder einem Gemisch dieser Reste oder für den Rest von Isophorondüsocyanat (IPDI) ohne die NCO-Gruppen.

10. Copolymer gemäß einem der Ansprüche 7 bis 9, **dadurch gekennzeichnet, dass** der Organopolysiloxanrest $R^5[SiR^6R^7O]_sSiR^8R^9$ der Komponente (B) und/oder der Komponente (C) eine lineare oder verzweigte Struktur besitzt und ein zahlenmittleres Molekulargewicht im Bereich von 200 bis 30000 g/mol aufweist, bevorzugt im Bereich von 500 bis 10000 g/mol, besonders bevorzugt im Bereich von 500 bis 5000 g/mol.

11. Copolymer gemäß einem der Ansprüche 1 bis 10, **dadurch gekennzeichnet, dass** mindestens ein polysiloxanfreies Amin (D) der Formel (II) zum Aufbau des Grundgerüstes des Copolymers verwendet wird:

$$HR^{18}N\text{-}R^{19} \qquad (II)$$

worin $R^{18}$ für Wasserstoff, einen Alkylrest, einen Cycloalkylrest, einen Arylrest oder einen Aralkylrest steht und
$R^{19}$ für einen Alkylrest, einen Cycloalkylrest, einen Arylrest, einen Aralkylrest, $R^{20}$-Z oder $CHR^{21}CH_2(OCH_2CH_2)q(OCHR^{22}CH_2)_r\text{-}O\text{-}R^{23}$ steht, wobei
$R^{20}$ für einen Alkylenrest steht,
Z für einen heterozyklischen Rest steht,
$R^{21}$ für Wasserstoff, einen Alkylrest mit 1 bis 4 Kohlenstoffatomen oder einen Arylrest steht,
alle $R^{22}$ unabhängig voneinander für Alkylreste mit 1 bis 4 Kohlenstoffatomen oder Arylreste stehen,
$R^{23}$ für einen Alkylrest mit 1 bis 12 Kohlenstoffatomen, einen Cycloalkylrest mit 3 bis 12 Kohlenstoffatomen oder

einen Arylrest mit 6 bis 12 Kohlenstoffatomen steht und
q und r unabhängig voneinander für ganze Zahlen von 0 bis 100 stehen, unter der Voraussetzung, dass wenigstens eines der Indices q und r nicht 0 beträgt.

**12.** Copolymer gemäß einem der Ansprüche 1 bis 11, **dadurch gekennzeichnet, dass** mindestens ein polysiloxanfreies Amin (D) der Formel (II) gemäß Anspruch 11 zum Aufbau des Grundgerüstes des Copolymers verwendet wird, wobei das polysiloxanfreie Amin (D) mindestens eine weitere funktionelle Gruppe trägt, vorzugsweise ist die funktionelle Gruppe eine Hydroxylgruppe, eine tertiäre Aminogruppe oder eine Doppelbindung.

**13.** Verfahren zur Herstellung eines Copolymers gemäß einem der Ansprüche 1 bis 12, **dadurch gekennzeichnet, dass** das Grundgerüst des Copolymers durch Umsetzung mindestens eines Epoxides mit mindestens einem Amin aufgebaut wird und dass an dem Grundgerüst mindestens eine Polysiloxan-Gruppe angeknüft wird.

**14.** Verfahren zur Herstellung eines Copolymers gemäß dem Anspruch 13, **dadurch gekennzeichnet, dass** die Polysiloxan-Gruppe eingeführt wird

(a) durch die Reaktion eines Epoxids mit einem monoaminofunktionellen Polysiloxan (B)
und/oder
(b) durch die Reaktion eines Epoxy/Amin-Copolymers mit einem monoisocyanatfunktionellen Polysiloxan (C).

**15.** Verwendung eines Copolymers gemäß einem der Ansprüche 1 bis 12 und/oder hergestellt nach einem Verfahren gemäß einem der Ansprüche 13 oder 14 als Additiv, wie Netz- und Dispergiermittel, Verlaufmittel, Entschäumer, Stabilisierungsmittel oder schmutz- und ölabweisendes Mittel, in Beschichtungsmitteln, Kunststoffen, Kosmetika oder homogenen Dispersionen, wie Pigment- und Füllstoffpräparationen.

**16.** Verwendung gemäß Anspruch 15, **dadurch gekennzeichnet, dass** der Copolymeranteil 0,01 bis 5 Gew.-%, bevorzugt 0,02 bis 2 Gew.-% und besonders bevorzugt 0,03 bis 1 Gew.-%, jeweils bezogen auf die gesamte Zusammensetzung des Beschichtungsmittels oder des Kunststoffes, in Beschichtungsmitteln oder Kunststoffen beträgt oder in homogenen Dispersionen, wie Pigment- und Füllstoffpräparationen, 0,01 bis 90 Gew.-%, bevorzugt 1 bis 50 Gew.-%, ganz besonders bevorzugt 2 bis 40 Gew.-%, jeweils bezogen auf die gesamte Zusammensetzung der homogenen Dispersion, beträgt.

**17.** Verfahren zur Herstellung einer homogenen Dispersion enthaltend mindestens ein Copolymer gemäß einem der Ansprüche 1 bis 12 und/oder hergestellt nach einem Verfahren gemäß einem der Ansprüche 13 oder 14, **dadurch gekennzeichnet, dass** das Verfahren das Mischen von mindestens einem Pigment und/oder Füllstoff in einem Träger, gewählt aus der Gruppe bestehend aus mindestens einem Silikonöl, mit Hilfe mindestens eines Copolymers gemäß einem der Ansprüche 1 bis 12 und/oder hergestellt nach einem Verfahren gemäß einem der Ansprüche 13 oder 14 umfasst.

**18.** Beschichtungsmittel, Kunststoffe oder homogene Dispersionen enthaltend mindestens ein Copolymer gemäß einem der Ansprüche 1 bis 12 und/oder hergestellt nach einem Verfahren gemäß einem der Ansprüche 13 oder 14.

**19.** Beschichtungsmittel, Kunststoffe oder homogene Dispersionen gemäß Anspruch 18, **dadurch gekennzeichnet, dass** der Copolymeranteil 0,01 bis 5 Gew.-%, bevorzugt 0,02 bis 2 Gew.-% und besonders bevorzugt 0,03 bis 1 Gew.-%, jeweils bezogen auf die gesamte Zusammensetzung des Beschichtungsmittels oder des Kunststoffes, in Beschichtungsmitteln oder Kunststoffen beträgt oder in homogenen Dispersionen, wie Pigment- und Füllstoffpräparationen, 0,01 bis 90 Gew.-%, bevorzugt 1 bis 50 Gew.-%, ganz besonders bevorzugt 2 bis 40 Gew.-%, jeweils bezogen auf die gesamte Zusammensetzung der homogenen Dispersion, beträgt.

Europäisches Patentamt
European Patent Office
Office européen des brevets

# EUROPÄISCHER RECHERCHENBERICHT

Nummer der Anmeldung
EP 10 01 3493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/093352 A1 (SIGMAKALON SERVICES B V [NL]; KLAASSENS LARS IVAR [NL]; DE JONG JAN [N) 13. November 2003 (2003-11-13)<br>* Ansprüche 5,8,12,18,21 *<br>* Seite 12, Zeile 1 - Seite 13, Zeile 16 *<br>----- | 1-5,12, 13,15,18 | INV.<br>C08G59/18<br>C09D7/12<br>C09D17/00<br>C08G77/388<br>C08G77/42<br>C08G77/452<br>C09D183/00 |
| X | EP 1 288 246 A1 (WACKER CHEMIE GMBH [DE]) 5. März 2003 (2003-03-05)<br>* Ansprüche 1,5 *<br>----- | 1-3 | |
| X | US 5 618 860 A (MOWRER NORMAN R [US] ET AL) 8. April 1997 (1997-04-08)<br>* Spalte 14, Zeile 1 - Zeile 35 *<br>* Ansprüche 1, 20 *<br>----- | 13,18 | |
| A,P | DATABASE CAPLUS [Online]<br>CHEMICAL ABSTRACTS SERVICE, COLUMBUS, OHIO, US;<br>1. Dezember 2010 (2010-12-01),<br>GAREA, SORINA-ALEXANDRA ET AL GAREA, SORINA-ALEXANDRA ET AL: "The influence of some new montmorillonite modifier agents on the epoxy-montmorillonite nanocomposites structure",<br>XP002629201,<br>gefunden im STN<br>Database accession no. 2010:1488128<br>* Zusammenfassung *<br>-/-- | 1-3,13, 15,18 | RECHERCHIERTE SACHGEBIETE (IPC)<br>C08G<br>C09D |

Der vorliegende Recherchenbericht wurde für alle Patentansprüche erstellt

| Recherchenort | Abschlußdatum der Recherche | Prüfer |
|---|---|---|
| München | 22. März 2011 | Mill, Sibel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

3

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 01 3493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,P | -& GAREA S A ET AL: "The influence of some new montmorillonite modifier agents on the epoxy-montmorillonite nanocomposites structure", APPLIED CLAY SCIENCE, ELSEVIER SCIENCE, NL, Bd. 50, Nr. 4, 1. November 2010 (2010-11-01), Seiten 469-475, XP027524693, ISSN: 0169-1317 [gefunden am 2010-11-01] * Scheme 1; Seite 470 * * Seite 470, Absatz 2.2 * ----- | 1-3,13, 15,18 | |
| A | EP 1 486 524 A1 (BYK CHEMIE GMBH [DE]) 15. Dezember 2004 (2004-12-15) * Anspruch 1 * ----- | 1-19 | |
| A,D | EP 1 193 303 A2 (BYK CHEMIE GMBH [DE]) 3. April 2002 (2002-04-03) * Ansprüche 6,17,18 * ----- | 1-19 | RECHERCHIERTE SACHGEBIETE (IPC) |

Der vorliegende Recherchenbericht wurde für alle Patentansprüche erstellt

3

| Recherchenort | Abschlußdatum der Recherche | Prüfer |
|---|---|---|
| München | 22. März 2011 | Mill, Sibel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 10 01 3493

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2011

| Im Recherchenbericht angeführtes Patentdokument | Datum der Veröffentlichung | Mitglied(er) der Patentfamilie | Datum der Veröffentlichung |
|---|---|---|---|
| WO 03093352 A1 | 13-11-2003 | AU 2003233204 A1 | 17-11-2003 |
| | | BR 0309760 A | 06-06-2006 |
| | | CA 2483867 A1 | 13-11-2003 |
| | | CN 1662581 A | 31-08-2005 |
| | | JP 2005529198 T | 29-09-2005 |
| | | KR 20050025171 A | 11-03-2005 |
| | | US 2005148752 A1 | 07-07-2005 |
| EP 1288246 A1 | 05-03-2003 | BR 0203112 A | 27-05-2003 |
| | | CN 1401683 A | 12-03-2003 |
| | | DE 10139963 A1 | 06-03-2003 |
| | | JP 4225753 B2 | 18-02-2009 |
| | | JP 2003073477 A | 12-03-2003 |
| | | US 2003045666 A1 | 06-03-2003 |
| US 5618860 A | 08-04-1997 | KEINE | |
| EP 1486524 A1 | 15-12-2004 | AT 492580 T | 15-01-2011 |
| | | CA 2469989 A1 | 06-12-2004 |
| | | CN 1572813 A | 02-02-2005 |
| | | DE 10326147 A1 | 03-03-2005 |
| | | JP 2004359956 A | 24-12-2004 |
| | | KR 20040105574 A | 16-12-2004 |
| | | US 2005020735 A1 | 27-01-2005 |
| EP 1193303 A2 | 03-04-2002 | AT 290576 T | 15-03-2005 |
| | | CA 2357341 A1 | 29-03-2002 |
| | | CN 1345904 A | 24-04-2002 |
| | | DE 10048259 A1 | 18-04-2002 |
| | | ES 2238370 T3 | 01-09-2005 |
| | | JP 2002121487 A | 23-04-2002 |
| | | KR 20020025828 A | 04-04-2002 |
| | | TW I226358 B | 11-01-2005 |
| | | US 2002103288 A1 | 01-08-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1193303 B1
- WO 2006125731 A
- EP 0931537 B1
- US 20040156809 A1
- US 20050020735 A
- WO 2008092687 A1
- WO 2005113676 A1
- DE 19919482 A1
- WO 9620971 A
- EP 0289240 A1
- WO 2004056716 A1
- WO 2005063637 A1
- EP 1980594 B1
- DE 19618569 A1
- WO 200188044 A
- EP 1532213 B1
- EP 1758550 A2
- DE 19501307 A1
- DE 19520312 A1
- DE 10361436 A1
- DE 102006006716 A1
- WO 2007076967 A
- EP 1251152 B1


### In der Beschreibung aufgeführte Nicht-Patentliteratur


- **JOHAN BIELEMAN.** Lackadditive. Wiley-VCH, 1998
- **HOUBEN-WEYL.** Methoden der Organischen Chemie. vol. 14/2, 61-70
- **W. SIEFKEN.** Justus Liebig's Annalen der Chemie. vol. 562, 75-136
- Chemie und Technologie der Silicone. VCH, 1984
- Polysiloxane Containing Copolymers: A Survey of Recent Development; Advances. **YIGÖR, I. ; MCGRATH, J. E.** Polymer Science. Springer-Verlag, 1988, vol. 86
- **T. SUZUKI.** *Polymer,* 1989, vol. 30, 333
- Römpp Lexikon Lacke und Druckfarben. Georg Thieme Verlag, 1998